# EUROPÄISCHE PATENTANMELDUNG

(11) **EP 1 341 082 A2**
(43) Veröffentlichungstag der Anmeldung: **03.09.2003**
(21) Anmeldenummer: 03003279.1
(22) Anmeldetag: 24.02.2003
(51) Int. Cl.: G06F 9/44

(54) **Verfahren zum rechnergestützten Erzeugen einer graphischen Benutzeroberfläche einer Geräteüberwachungs-/Steuerungseinheit**

(30) Priorität: 26.02.2002 DE 10208146
(71) Anmelder: BSH Bosch und Siemens Hausgeräte GmbH, 81669 München (DE)
(72) Erfinder: Ellinger, Michael, 2243 Matzen (AT); Engl, Peter, 93146 Laaber (DE); Ritter, Joachim, 65549 Limburg (DE); Witte, Sebastian, 30177 Hannover (DE)

(57) **Zusammenfassung**

Es wird aus einer Basis-Konfigurationsdatei (2205) eine Basisstruktur (2206) der graphischen Benutzeroberfläche (2204) ermittelt sowie abhängig von der Basisstruktur gerätespezifische statische Detaildaten (2208) aus einer spezifischen Geräte-Konfigurationsdatei (2207). Abhängig von der Basisstruktur (2205) werden ferner abhängig von der Basisstruktur (2206) gerätespezifische dynamische Detaildaten (2210), welche von dem zu überwachenden und/oder zu steuerndem Gerät bereitgestellt werden und den Zustand des Geräts beschreiben, ermittelt, und die graphische Benutzeroberfläche (2204) wird gemäß der Basisstruktur (2206), den statischen Detaildaten (2208) und den dynamischen Detaildaten (2210) gebildet.

## Beschreibung

Die Erfindung betrifft ein Verfahren zum Erzeugen einer graphischen Benutzeroberfläche sowie eine Geräteüberwachungs-/Steuerungseinheit.

Es ist bekannt, unter Verwendung des HTML-Formats (**H**yper**t**ext **M**arkup **L**anguage) oder des WML-Formats (**W**ireless **M**arkup **L**anguage) eine graphische Benutzeroberfläche zu erzeugen, welche statische, von der die graphischen Benutzeroberfläche bereitstellenden Instanz vorgegebenen Elemente enthalten.

Ein Beispiel solcher statischen Elemente in einer graphischen Benutzeroberfläche sind die sogenannten Widgets, welche Funktionselemente in der graphischen Benuteroberfläche darstellen.

Weiterhin ist es aus [1] bekannt, unter Verwendung der so genannten Pushlet-Technologie von einem Client-Rechner Werte in die dargestellte graphische Benutzeroberfläche eines anderen Client-Rechners oder eines Server-Rechners einzufügen.

Der Erfindung liegt das Problem zugrunde, ein Verfahren zum rechnergestützten Erzeugen einer graphischen Benutzeroberfläche einer Geräteüberwachungseinheit und/oder Gerätesteuerungseinheit sowie eine Geräteüberwachungs-/Steuerungseinheit anzugeben, mit dem, bzw. mit der eine sehr einfache Überwachung und/oder Steuerung einer Vielzahl von Geräten auf einfache Weise unter Verwendung üblicher Browser-Technologie ermöglicht wird.

Das Problem wird durch das Verfahren zum rechnergestützten Erzeugen einer graphischen Benutzeroberfläche sowie durch die Geräteüberwachungs-/Steuerungseinheit mit den Merkmalen gemäß den unabhängigen Patentansprüchen gelöst.

Bei einem Verfahren zum rechnergestützten Erzeugen einer graphischen Benutzeroberfläche einer Geräteüberwachungseinheit und/oder Gerätesteuerungseinheit wird auf einer Basis-Konfigurationsdatei eine Basisstruktur der graphischen Benutzeroberfläche ermittelt.

In der Basis-Konfigurationsdatei ist jeweils die Basisstruktur, d.h. der Aufbau einer graphischen Benutzeroberfläche, vorzugsweise definiert gemäß dem HTML-Format oder dem WML-Format, gespeichert. Die Basisstruktur selbst ist vorzugsweise gemäß einem Metadaten-Format, beispielsweise gemäß dem XML-Format (**E**xtended **M**arkup **L**anguage) in der Basis-Konfigurationsdatei codiert.

In der Basisstruktur sind insbesondere als Parameter Informationen darüber enthalten, über welche Geräte detailliertere Daten in der graphischen Benutzeroberfläche in die graphische Benutzeroberfläche aufgenommen und einem Benutzer angezeigt werden sollen.

Erfindungsgemäß werden abhängig von der in der Basisstruktur enthaltenen Information die gewünschten und dort angegebenen gerätespezifischen statischen Detaildaten aus einer gerätespezifischen Geräte-Konfigurationsdatei, welche üblicherweise durch einen Verweis in der Basisstruktur selbst in Form eines Zeigers (anschaulich einer Pfadangabe), vorzugsweise einer URL, ermittelt. Abhängig der in der Basisstruktur angegebenen Information werden somit gerätespezifische statische Detaildaten aus den jeweils angegebenen gerätespezifischen Geräte-Konfigurationsdateien ermittelt.

Ferner sind in der Basisstruktur noch Informationen darüber enthalten, zu welchen Geräten jeweils Zustandsinformationen, allgemein jeglicher Art von sich verändernder, als dynamischer Information, im Weiteren auch als dynamische Detaildaten bezeichnet, gewünscht werden. Die angegebenen dynamischen Detaildaten, welche von einem jeweils zu überwachenden und/oder zu steuernden Gerät bereitgestellt werden und welche jeweils einen aktuellen Zustand des zu überwachenden und/oder des zu steuernden Gerätes beschreiben, werden ermittelt. In diesem Zusammenhang ist der Begriff "aktuell" dahingehend zu verstehen, dass jeweils der Zustand ermittelt wird, den das Gerät zuletzt als Zustandsinformation bereitgestellt hat.

In einem letzten Schritt wird die graphische Benutzeroberfläche generiert gemäß der Basisstruktur, den statischen Detaildaten und den dynamischen Detaildaten, wobei üblicherweise die statischen Detaildaten und die dynamischen Detaildaten in die graphische Benutzeroberfläche gemäß der Basisstruktur eingefügt werden.

Eine Überwachungs-/Steuerungseinheit weist eine Prozessoreinheit zum Erzeugen einer graphischen Benutzeroberfläche auf, wobei die Prozessoreinheit derart eingerichtet ist, dass die oben beschriebenen Verfahrensschritte durchführbar sind.

Durch die Erfindung wird es auf sehr einfache Weise ermöglicht, für eine Vielzahl unterschiedlicher Geräte eine graphischen Benutzeroberfläche zum Überwachen und/oder zum Steuern der unterschiedlichen Geräte bereitzustellen, wobei die graphische Benutzeroberfläche gebildet wird aus einer generellen Basisstruktur sowie die allgemeine Basisstruktur gerätespezifisch konkretisierenden statischen Detaildaten, welche über die Zeit unveränderlich sind, jedoch abhängig sind von den jeweiligen Geräten, wobei die statischen Detaildaten jeweils in unterschiedlichen, für die Geräte jeweils spezifischen Geräte-Konfigurationsdateien enthalten sind, wodurch gewährleistet wird, dass eine Erweiterung der jeweiligen zu überwachenden bzw. zu steuernden Geräte durch einfaches Erweitern oder Hinzufügen bzw. durch Entfernen einer jeweiligen gerätespezifischen Geräte-Konfigurationsdatei ermöglicht wird.

Ferner werden auch die Überwachung und/oder Steuerung kontinuierlicher Zustandsveränderungen der Geräte durch Berücksichtigung der dynamischen Detaildaten über ein jeweils zu überwachendes, bzw. zu steuerndes Gerät erreicht.

Bevorzugte Weiterbildungen der Erfindung ergeben sich aus den abhängigen Ansprüchen.

Das Ermitteln der Basisstruktur und/oder der statischen Detaildaten und/oder der dynamischen Detaildaten erfolgt gemäß einer Ausgestaltung der Erfindung gemäß einem Kommunikationsprotokoll der Anwendungsschicht im Sinne des OSI-Referenzmodells (**O**pen **S**ystem **I**nterconnection-Referenzmodell). Vorzugsweise werden als Kommunikationsprotokoll der Anwendungsschicht das Kommunikationsprotokoll gemäß dem HTTP-Standard (**H**yper**t**ext **T**ransport **P**rotocol) oder dem WAP-Standard (**W**ireless **A**pplication **P**rotocol) durchgeführt.

Die Basisstruktur in einer jeweiligen Basis-Konfigurationsdatei ist gemäß einer Ausgestaltung einer Erfindung gemäß einem Metadaten-Format, weiter vorzugsweise gemäß dem XML-Format codiert.

Durch den Einsatz von allgemein gültigen und weit verbreiteten Standards im Rahmen der Erfindung wird eine universelle Einsetzbarkeit und damit eine kostengünstige und im Wesentlichen plattformunabhängige Bereitstellung der gewünschten Daten ermöglicht.

Die Basis-Konfigurationsdatei und/oder die Geräte-Konfigurationsdatei können in einem Speicher einer Gebäude-Gateway-Rechnervorrichtung, im Weiteren auch als Residential Gateway bezeichnet, gespeichert sein.

Gemäß dieser Ausgestaltung der Erfindung wird zum Ermitteln der Basisstruktur von der Steuerungseinheit eine Basisstruktur-Anforderungsnachricht an die Gebäude-Gateway-Rechnervorrichtung übermittelt und aufgrund der Basisstruktur-Anforderungsnachricht wird die gewünschte Basisstruktur aus der Basisstruktur-Konfigurationsdatei ermittelt und es wird eine Basisstrukturnachricht von der Gebäude-Gateway-Rechnervorrichtung gebildet, welche die angeforderte Basisstruktur enthält.

Die gebildete Basisstrukturnachricht wird von der Gebäude-Gateway-Rechnervorrichtung an die Steuerungseinheit übermittelt.

Zum Ermitteln der statischen Detaildaten können von der Steuerungseinheit eine erste Detaildaten-Anforderungsnachricht an die Gebäude-Gateway-Rechnervorrichtung übermittelt werden, woraufhin die Gebäude-Gateway-Rechnervorrichtung die gewünschten ersten statischen Detaildaten aus den jeweiligen gerätespezifischen Geräte-Konfigurationsdateien ermittelt.

Anschließend wird von der Gebäude-Gateway-Rechnervorrichtung eine erste Detaildatennachricht erzeugt, welche die angeforderten statischen Detaildaten enthält.

Die erste Detaildatennachricht wird von der Gebäude-Gateway-Rechnervorrichtung an die Steuerungseinheit übermittelt.

Ferner wird zum Ermitteln der dynamischen Detaildaten von der Steuerungseinheit eine zweite Detaildaten-Anforderungsnachricht an die Gebäude-Gateway-Rechnervorrichtung übermittelt, in welcher gemäß der Basisstruktur angegebene zweite Detaildaten enthalten sind.

Nach Erhalt der zweiten Detaildaten-Anforderungsnachricht wird von der Gebäude-Gateway-Rechnervorrichtung für das jeweilige Gerät der jeweilige Zustand ermittelt, d.h. es werden die angeforderten dynamischen Detaildaten ausgelesen und/oder von dem jeweiligen Gerät selbst direkt ermittelt. Sind die zweiten Detaildaten ermittelt worden, wird eine diese enthaltenden zweite Detaildatennachricht von der Gebäude-Gateway-Rechnervorrichtung gebildet und von dieser an die Steuerungseinheit übermittelt.

Die Basisstruktur-Anforderungsnachricht, die erste Detaildaten-Anforderungsnachricht und die zweite Detaildaten-Anforderungsnachricht können in einer Anforderungsnachricht oder in zwei Anforderungsnachrichten zusammengefasst sein, in welcher die jeweiligen gewünschten Daten angefordert werden.

Es ist in diesem Zusammenhang anzumerken, dass die Daten der Basisstruktur, die ersten Detaildaten und/oder die zweiten Detaildaten in einem Speicher der Gebäude-Gateway-Rechnervorrichtung selbst gespeichert sein können. Alternativ ist es vorgesehen, dass in einem dezentralisierten System die Daten erst von einem oder mehreren anderen (Server)-Rechnern bzw. den Geräten ermittelt werden und nach erfolgter Ermittlung von der Gebäude-Gateway-Rechnervorrichtung an die Steuerungseinheit in der oben beschriebenen Weise übermittelt werden.

Das zu überwachende und/oder zu steuernde Gerät kann ein beliebiges kommunikationsfähiges in einem Gebäude angeordnetes und mit einem entsprechenden Inhaus-Bussystem gekoppeltes Gerät sein, vorzugsweise ist das Gerät ein kommunikationsfähiges Hausgerät.

Gemäß einer Ausgestaltung der Erfindung werden in diesem Fall die zweiten Detaildaten von dem Hausgerät zu der Geräteüberwachungs-/Steuerungseinheit und/oder zu einer Gebäude-Gateway-Rechnervorrichtung gemäß einem Inhaus-Kommunikationsprotokoll, wenn das Gerät ein Hausgerät ist, gemäß einem Hausgeräte-Kommunikationsprotokoll übermittelt.

Als Hausgeräte-Kommunikationsprotokoll wird vorzugsweise das EHS-Kommunikationsprotokoll (**E**uropean **H**ome **S**ystems-Kommunikationsprotokoll) verwendet. Alternativ können als Inhaus-Kommunikationsprotokoll das UPnP oder das Kommunikationsprotokoll gemäß LonWork oder auch gemäß dem HES-Kommunikationsprotokoll (**H**ome **E**lectronic **S**ystem) verwendet werden.

Das Hausgerät kann als eines der folgenden Hausgeräte eingerichtet sein:
- Waschmaschine,
- Wäschetrockner,
- Herd,
- Kühlschrank,
- Geschirrspüler,
- Dunstabzugshaube,
- Klimaanlage,
- Kaffeemaschine,
- Staubsauger,
- Kochmulde, oder
- Gefrierschrank.
   Allgemein kann eine beliebige Anzahl von Geräten erfindungsgemäß überwacht, bzw. gesteuert werden, in welchen Fällen dann jeweils eine Vielzahl von gerätespezifischen Geräte-Konfigurationsdateien gebildet werden, aus welchen die jeweiligen gerätespezifischen statischen Detaildaten ermittelt und der Überwachungs-/Steuerungseinheit bereitgestellt werden.
   Ein Ausführungsbeispiel der Erfindung ist in den Figuren dargestellt und wird im Weiteren näher erläutert.

### Es zeigen

Figur 1 ein Blockdiagramm, in dem mehrere Gebäude, in den Gebäuden jeweils mehrere Geräte, ein Gateway und ein über ein öffentliches Telekommunikationsnetz gekoppelter Server, dargestellt sind;
Figur 2 eine Skizze eines Gehäuses mit einer Residential-Gateway-Rechnervorrichtung und einer Vielzahl zu steuernder Geräte sowie einer externen Steuereinheit, mittels der die einzelnen zu steuernden Geräte angesteuert werden;
Figur 3 eine Skizze der Software-Architektur der Residential-Gateway-Rechnervorrichtung sowie eine Darstellung der Kopplung der Residential-Gateway-Rechnervorrichtung mit einem zu steuernden Gerät über/ein lokales Gebäudenetzwerk sowie mit einem öffentlichen Kommunikationsnetz;
Figur 4 eine Skizze einer Vielzahl gemäß dem bevorzugten Ausführungsbeispiel verwendeter OSGI-Bundle;
Figur 5 ein Blockdiagramm, anhand dessen das Gesamtsystem gemäß diesem Ausführungsbeispiel näher erläutert wird;
Figur 6 ein Ablaufdiagramm, in dem die Zuordnung von Gebäudeadressen für ein zu steuerndes Gerät dargestellt ist;
Figur 7 ein Nachrichtenflussdiagramm, in dem das Erfassen schon an das lokale Gebäudenetzwerk angeschlossener zu steuernder Geräte dargestellt ist;
Figur 8 ein Nachrichtenflussdiagramm, in dem die einzelnen Verfahrensschritte zum Erfassen neu an das lokale Gebäudenetzwerk angeschlossener zu steuernder Geräte durch die Gebäude-Gateway-Rechneranordnung dargestellt sind;
Figur 9 ein Nachrichtenflussdiagramm, in dem die Schritte dargestellt sind, die von der Gebäude-Gateway-Rechneranordnung durchgeführt werden, um auf die einzelnen Funktionen eines jeweils zu steuernden Gerätes Zugriff zu erhalten;
Figur 10 ein Nachrichtenflussdiagramm, in dem der Nachrichtenfluss einer von einer externen Steuereinheit an das zu steuernde Gerät gesendeten Nachricht und einer entsprechenden Empfangsbestätigung beschrieben sind;
Figur 11 eine Skizze der logischen Struktur der Ausgestaltung der Gebäude-Gateway-Rechnerandordnung gemäß dem Ausführungsbeispiel der Erfindung;
Figur 12 ein Blockdiagramm der Struktur der EHS-Schicht aus Figur 11;
Figur 13 ein Blockdiagramm, das die Kommunikationsstruktur in der EHS-Schicht gemäß Figur 11 zeigt;
Figuren 14A und 14B Blockdiagramme, welche die Interaktion der Elemente der EHS-Schicht aus Figur 11 mit der Gerätetreiber-Schicht aus Figur 11 (Figur 14A) und dem EHS-Modem (Figur 14B) zeigen;
Figur 15 ein Blockdiagramm, welches die Struktur der Gerätetreiber-Schicht aus Figur 11 zeigt;
Figur 16A bis 16C Blockdiagramme, anhand derer die Interaktion der Gerätetreiber-Schicht aus Figur 11 mit einer Gerätezugriffs-Schnittstellen-Verwaltungseinheit (Figur 16A) mit der EHS-Schicht aus Figur 11 (Figur 16B) sowie der GUI-Schicht aus Figur 11 (Figur 16C) zeigt;
Figur 17 ein Blockdiagramm, das die Struktur der GUI-Schicht aus Figur 11 im Detail darstellt;
Figuren 18A und 18B Blockdiagramme, welche die Interaktion mit der Gerätetreiber-Schicht aus Figur 11 (Figur 18A) sowie einem Benutzer (Figur 18B) zeigt;
Figur 19 ein Nachrichtenflussdiagramm, das den Nachrichtenfluss eines von einem Benutzer angegebenen Befehls zu dem Modem zeigt;
Figur 20 ein Nachrichtenflussdiagramm, welches den Nachrichtenfluss eines Ereignisses von dem Modem zu den Elementen der GUI-Schicht aus Figur 11 zeigt; und
Figur 21 eine Skizze der physikalischen Struktur der Ausgestaltung der Gebäude-Gateway-Rechnerandordnung gemäß dem Ausführungsbeispiel der Erfindung;
Figur 22 ein Nachrichtenflussdiagramm, in welchem das Erzeugen einer graphischen Benutzeroberfläche gemäß dem bevorzugten Ausführungsbeispiel der Erfindung dargestellt ist;
Figur 23 eine Darstellung einer ersten graphischen Bildschirmoberfläche, welche eine Übersicht über mehrere zu steuernde Geräte gibt;
Figur 24 eine Skizze einer zweiten graphischen Bildschirmoberfläche gemäß einem Ausführungsbeispiel der Erfindung zur Steuerung eines zu steuernden Gerätes;
Figur 25, eine Skizze einer dritten graphischen Benutzeroberfläche gemäß dem Ausführungsbeispiel der Erfindung;
Figur 26 eine Skizze einer vierten graphischen Benutzeroberfläche gemäß dem Ausführungsbeispiel der Erfindung; und
Figur 27 eine Skizze einer fünften graphischen Benutzeroberfläche gemäß dem Ausführungsbeispiel der Erfindung.

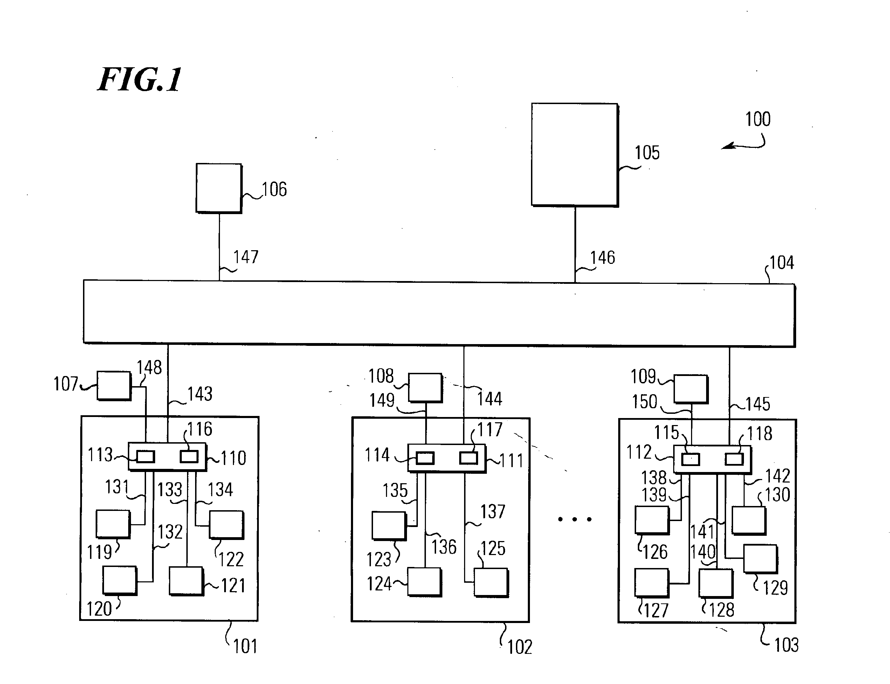

**Fig.1** zeigt ein Steuerungssystem 100 mit einer Vielzahl von Gebäuden 101, 102, 103, einem öffentlichen Telekommunikationsnetz 104, einem Verwaltungsserver-Rechner 105 sowie externen Steuereinheiten 106, 107, 108, 109.

In jedem Gebäude 101, 102, 103 ist ein Residential-Gateway, anders ausgedrückt, eine Gebäude-Gateway-Rechnervorrichtung 110, 111, 112, vorgesehen, wobei jede Gebäude-Gateway-Rechnervorrichtung 110, 111, 112 jeweils einen Speicher 113, 114, 115 und einen Prozessor 116, 117, 118 aufweist.

Ferner ist mindestens jeweils eine erste Kommunikationsschnittstelle (nicht gezeigt) vorgesehen, welche eingerichtet ist zur Kommunikation der Gebäude-Gateway-Rechnervorrichtung 110, 111, 112 mit einem oder mehreren in dem jeweiligen Gebäude angeordneten zu steuernden Geräten 119, 120, 121, 122, 123, 124, 125, 126, 127, 128, 129, 130, welche über jeweilige Kommunikationsverbindungen 131, 132, 133, 134, 135, 136, 137, 138, 139, 140, 141, 142 mit der jeweiligen Gebäude-Gateway-Rechnervorrichtung 110, 111, 112 gekoppelt sind, wobei die zu steuernden Geräte 119, 120, 121, 122 in dem ersten Gebäude 101, die zu steuernden Geräte 123, 124, 125 in dem zweiten Gebäude 102 und die zu steuernden Geräte 126, 127, 128, 129, 130 in dem dritten Gebäude 103 angeordnet sind.

Wie im Weiteren noch näher erläutert wird, können die Kommunikationsverbindungen 131, 132, 133, 134, 135, 136, 137, 138, 139, 140, 141, 142 unter Verwendung unterschiedlicher Übertragungsprinzipien und somit auch auf unter Verwendung unterschiedlicher Kommunikationsprotokollen und Kommunikationsmedien gebildet werden, womit üblicherweise mehrere unterschiedliche erste Kommunikationsschnittstellen in der jeweiligen Gebäude-Gateway-Rechnervorrichtung 110, 111, 112 vorgesehen sind.

Ferner ist eine zweite Kommunikationsschnittstelle in jeder Gebäude-Gateway-Rechnervorrichtung 110, 111, 112 vorgesehen, über welche zweite Kommunikationsschnittstelle die Gebäude-Gateway-Rechnervorrichtung 110, 111, 112 mit dem öffentlichen Kommunikationsnetz 104 gekoppelt ist.

Gemäß diesem Ausführungsbeispiel der Erfindung erfolgt die Kommunikation über das öffentliche Kommunikationsnetz 104 unter Verwendung des **T**ransport **C**ontrol **P**rotocols (TCP) und des **I**nternet **P**rotocols (IP).

Die Gebäude-Gateway-Rechnervorrichtungen 110, 111, 112 sind jeweils über zweite Kommunikationsverbindungen143, 144, 145 mit dem öffentlichen Telekommunikationsnetz 104 verbunden.

Ferner ist der die jeweiligen Gebäude-Gateway-Rechnervorrichtungen 110, 111, 112 verwaltende Server-Rechner 105 über eine dritte Kommunikationsverbindung 146 mit dem öffentlichen Kommunikationsnetz 104 gekoppelt und darüber mit der jeweiligen Gebäude-Gateway-Rechnervorrichtung 110, 111, 112.

Die externen Steuereinheiten 106, 107, 108, 109, welche zur Steuerung der zu steuernden Geräte 119, 120, 121, 122, 123, 124, 125, 126, 127, 128, 129, 130 dienen, sind über eine vierte Kommunikationsverbindung 147 (externe Steuereinheit 106) über das öffentliche Kommunikationsnetz 104 an die jeweiligen Gebäude-Gateway-Rechnervorrichtungen 110, 111, 112 gekoppelt oder unmittelbar, ohne eine Verbindung über das öffentliche Kommunikationsnetz aufzubauen, über fünfte Kommunikationsverbindungen 148, 149, 150 direkt mit der jeweiligen Gebäude-Gateway-Rechnervorrichtung 110, 111, 112, wobei auch in diesem Fall die Kommunikation unter Verwendung der Kommunikationsprotokolle TCP und IP erfolgt.

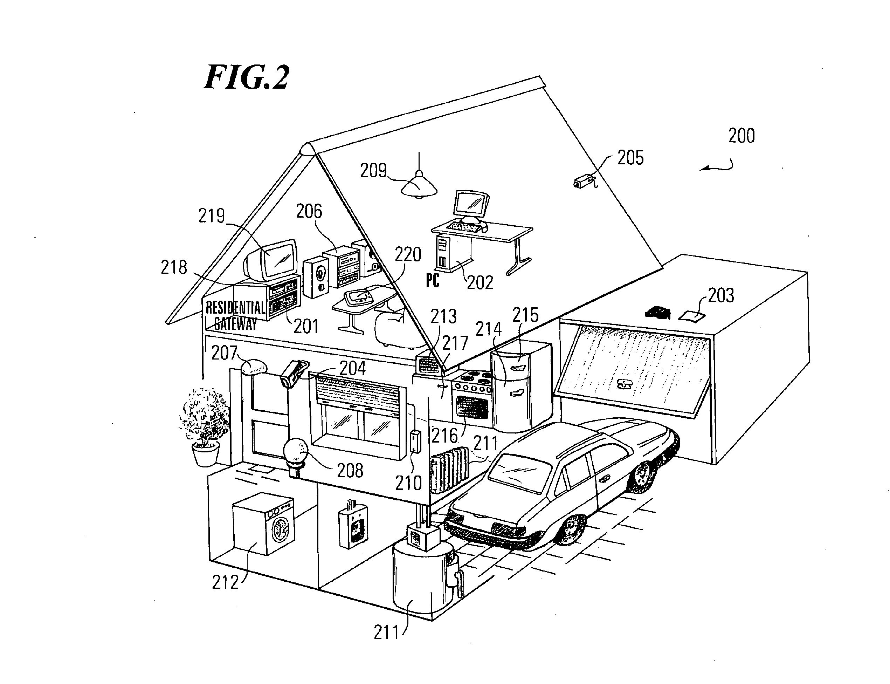

**Fig.2** zeigt eine Skizze eines Gebäudes 200 gemäß einem Ausführungsbeispiel der Erfindung.

In dem Gebäude 200 ist eine Gebäude-Gateway-Rechnervorrichtung 201 vorgesehen, die ausgestaltet ist wie in **Fig.1** beschrieben.

Ein Charakteristikum der Gebäude-Gateway-Rechnervorrichtung 201 ist, dass die Verwaltung, insbesondere die Installation und Wartung der Gebäude-Gateway-Rechnervorrichtung 201 über den Server-Rechner 105 erfolgt und nicht über einen Benutzer, der unmittelbaren Zugriff auf die Gebäude-Gateway-Rechnervorrichtung 201 in dem Gebäude 200 erhält.

Abhängig von dem jeweils an die Gebäude-Gateway-Rechnervorrichtung 201 angeschlossenen Geräten und dem jeweils verwendeten Kommunikationsprotokoll zur Kommunikation zwischen einem jeweiligen zu steuernden Gerät und der Gebäude-Gateway-Rechnervorrichtung 201 ist jeweils eine unterschiedliche Art der Datenübertragung und somit ein unterschiedliches Kommunikationsprotokoll vorgesehen und entsprechend ist jeweils eine erste Kommunikationsschnittstelle in der Gebäude-Gateway-Rechnervorrichtung 201 vorgesehen und zur Realisierung und Durchführung des jeweiligen Kommunikationsprotokolls eingerichtet.

Gemäß diesem Ausführungsbeispiel sind in dem Gebäude als zu steuernde Geräte
- ein Personalcomputer 202,
- ein Garagentoröffner 203,
- eine digitale Kamera 204,
- ein Bewegungsmelder 205,
- eine Stereoanlage 206,
- Leuchten 207, 208, 209,
- eine Jalousien-Steuereinrichtung 210,
- eine Heizungsanlage 211,
- eine Waschmaschine 212,
- als Küchengeräte
   • eine Mikrowelle 213,
   • ein Kühlschrank 214,
   • ein Gefrierschrank 215,
   • ein Herd 216, sowie
   • eine Geschirrspülmaschine 217,
- ein Videorekorder 218, sowie
- ein Fernseher 219,
   vorgesehen.

Der Personal Computer 202 ist mit der Gebäude-Gateway-Rechnervorrichtung 201 über das Internet gekoppelt, anders ausgedrückt, die erste Kommunikationsschnittstelle zur Kommunikation zwischen der Gebäude-Gateway-Rechnervorrichtung 201 und dem Personal Computer 202 ist zur Kommunikation gemäß dem Internet Protocol eingerichtet.

Der Garagentoröffner 203 ist mit der Gebäude-Gateway-Rechnervorrichtung 201 über eine Bluetooth-Kommunikationsverbindung gekoppelt, anders ausgedrückt, zur Kommunikation mit dem Garagentoröffner 203 ist die erste Kommunikationsschnittstelle gemäß dem Bluetooth-Protokoll ausgestaltet und die Kommunikation erfolgt über eine Luftschnittstelle.

Die digitale Kamera 204 und der Bewegungsmelder 205 sind mit der Gebäude-Gateway-Rechnervorrichtung 201 über eine als USB-Schnittstelle ausgestaltete erste Kommunikationsschnittstelle mit der Gebäude-Gateway-Rechnervorrichtung 201 gekoppelt und gemäß dem USB-Kommunikationsprotokoll von dieser steuerbar.

Die Stereoanlage 206 sowie der Videorekorder 218 und der Fernseher 219 sind mit der Gebäude-Gateway-Rechnervorrichtung 201 über eine gemäß dem HAVi-Standard eingerichtete Kommunikationsschnittstelle gekoppelt und darüber von der der Gebäude-Gateway-Rechnervorrichtung 201 steuerbar.

Die Leuchten 207, 208, 209 sowie die Jalousien-Steuerung 210 und die Heizungsanlage 211 sind mit der Gebäude-Gateway-Rechnervorrichtung 201 über eine gemäß dem EIB/LonWorks-Kommunikationsprotokoll gekoppelt und gemäß diesem Protokoll von dieser steuerbar.

Die Haushaltsgeräte, das heißt insbesondere die Waschmaschine 212, sowie die Küchengeräte, das heißt die Mikrowelle 213, der Kühlschrank 214, der Eisschrank 215, der Herd 216 und der Geschirrspüler 217 sind mit der Gebäude-Gateway-Rechnervorrichtung 201 über eine gemäß dem EHS-Standard eingerichtete erste Kommunikationsschnittstelle gekoppelt und von dieser gemäß dem EHS-Kommunikationsprotokoll steuerbar.

Ferner ist in **Fig.2** eine externe, vorzugsweise zentrale, Steuereinheit 220 dargestellt, welche verwendet wird zur Steuerung der zu steuernden Geräte 202, 203, 204, 205, 206, 207, 208, 209, 210, 211, 212, 213, 214, 215, 216, 217, 218, 219.

Die externe Steuereinheit 220 ist über eine direkte Kommunikationsverbindung, auf physikalischer Ebene eingerichtet gemäß dem DECT-Standard, auf Ebene der Transportschichten unter Verwendung des TCP und IP über eine zur Kommunikation in dieser Form eingerichteten zweiten Kommunikationsschnittstelle in der Gebäude-Gateway-Rechnervorrichtung 201 mit dieser gekoppelt.

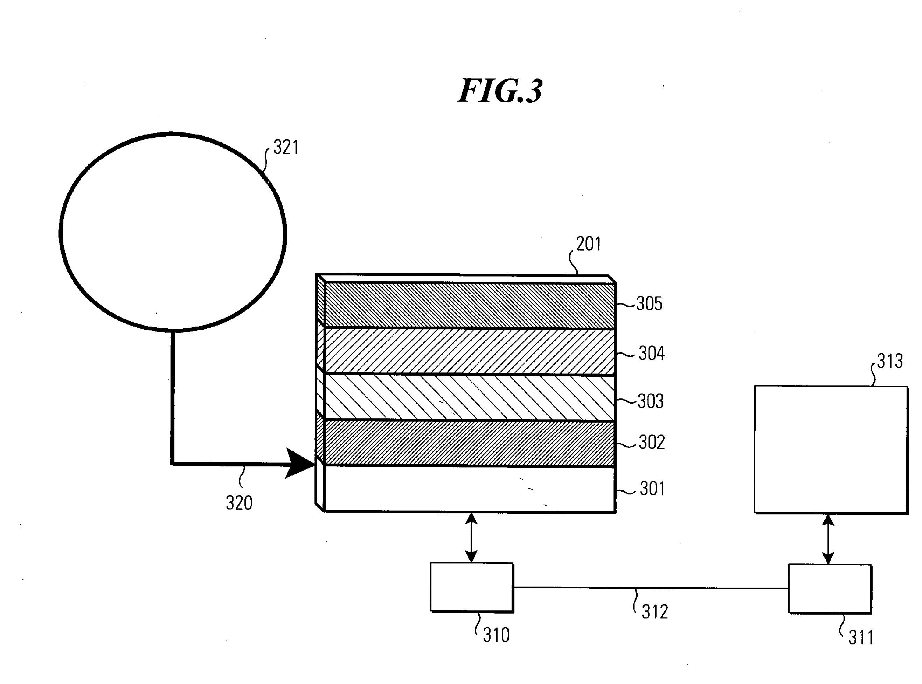

**Fig.3** zeigt die Ausgestaltung der Gebäude-Gateway-Rechnervorrichtung 201 gemäß dem Ausführungsbeispiel der Erfindung.

In Fig.3 ist die Ausgestaltung in Form eines Blockdiagramms symbolisch angedeutet.

In der Gebäude-Gateway-Rechnervorrichtung 201 ist eine Hardware 301 vorgesehen, welche eine Kommunikation über ein erstes Powerline-Modem 310, welches an die Hardware 301, insbesondere an eine Eingangs-Ausgangsschnittstelle der Hardware 301 angeschlossen ist, ermöglicht.

Ferner ist in der Gebäude-Gateway-Rechnervorrichtung 201 ein Betriebsystem 302 installiert, gemäß diesem Ausführungsbeispiel Linux, alternativ Windows NT.

Allgemein kann erfindungsgemäß jedes Betriebssystem verwendet werden, welches die jeweils verwendete plattformunabhängige Ausführungsschicht unterstützt. Erfindungsgemäß ist eine Java Virtual Machine 303 als plattformunabhängiges Ausführungsschicht-Computerprogramm installiert, auf welcher Java Virtual Machine eine objektorientierte Diensteplattform, gemäß diesem Ausführungsbeispiel ein OSGI-Framework 304, anschaulich ein Basisklassensystem, installiert.

Alternativ kann als Ausführungsschicht C# verwendet werden, in welchem Fall UPnP als Kommunikationsprotokoll eingesetzt werden kann.

Ferner sind in der Gebäude-Gateway-Rechnervorrichtung 201 eine Mehrzahl von OSGI-Bundles 305 installiert, welche im Weiteren noch näher erläutert werden.

Über das erste Powerline-Modem 310 ist die Gebäude-Gateway-Rechnervorrichtung 201 mit einem zweiten Powerline-Modem 311 über eine Stromleitung als Powerline-Kommunikationsverbindung 312 gekoppelt. Mit dem zweiten Powerline-Modem 311 ist das jeweils zu steuernde Gerät 313 gekoppelt.

Über die Powerline-Kommunikationsverbindung 312 erfolgt die Kommunikation zwischen der Gebäude-Gateway-Rechnervorrichtung 201 und dem zu steuernden Gerät 313 gemäß dem EHS-Kommunikationsprotokoll.

Die Powerline-Kommunikationsverbindung 312 stellt somit das lokale Gebäudenetzwerk dar.

Ferner ist in **Fig.3** symbolisch der über das öffentliche Kommunikationsnetz 320 mit der Gebäude-Gateway-Rechnervorrichtung 201 gekoppelte Server-Rechner 321 dargestellt.

Für die physikalische Datenübertragung können unterschiedlichste Prinzipien und somit unterschiedliche Medien unter Verwendung des öffentlichen Kommunikationsnetzes 320 eingesetzt werden, beispielsweise ein ISDN-Kommunikationsnetz, ein ADSL-Kommunikationsnetz, ein übliches analoges Telekommunikationsnetz, etc.

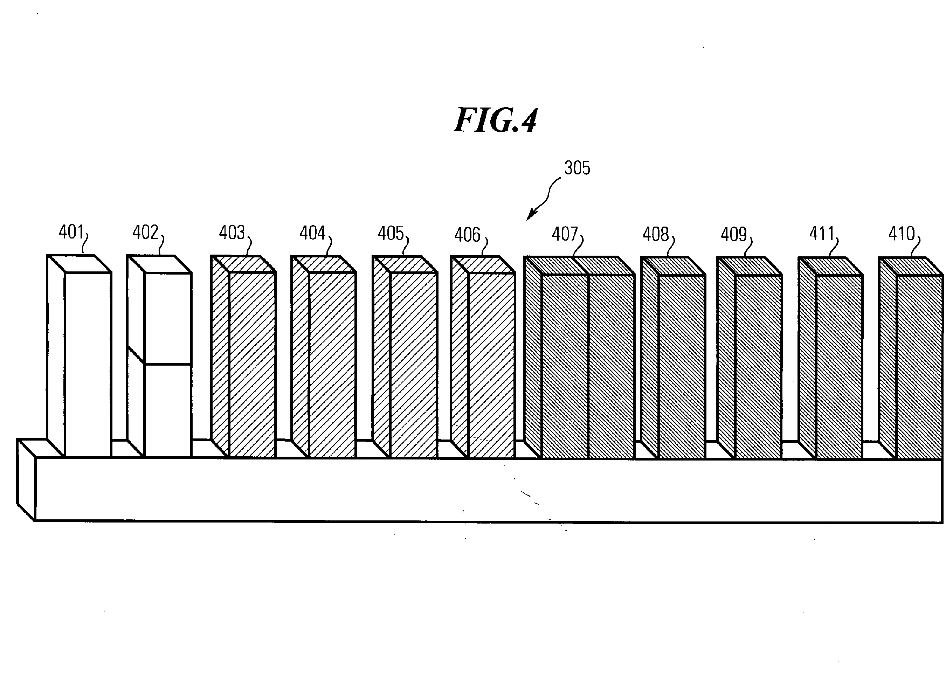

**Fig.4** zeigt eine nähere Darstellung der erfindungsgemäß vorgesehenen OSGI-Bundles 305.

Unter einem Bundle ist allgemein ein Objekt zu verstehen, das Dienstschnittstellen und deren Implementierungen sowie weitere Ressourcen enthält, beispielsweise HTML-Seiten oder Bilder. Anschaulich stellt ein Bundle eine funktionale Komponente bereit, wenn sie innerhalb der jeweiligen Diensteplattform installiert und aktiviert wird. Somit stellt ein Bundle einen Dienst oder eine Funktion bereit, beispielsweise zur Steuerung eines zu steuernden Geräts oder auch einen Dienst, vorzugsweise einen höherwertigen Dienst im Rahmen des OSI-Referenzmodells, beispielsweise einen Dienst der Anwendungsschicht, anschaulich somit einen Dienst, der eine Kommunikation gemäß dem jeweiligen Protokoll der Anwendungsschicht ermöglicht.

Somit sind gemäß dem Ausführungsbeispiel der Erfindung als Bundles 305 ein EHS-Treiber-Bundle 401, ein Java-Treiber-Bundle 402, gerätespezifische Bundle 403, 404, 405, 406, Bundles 407 zur Bereitstellung von Kommunikationsprotokollen der Anwendungsschicht wie beispielsweise HTTP (**H**yper**t**ext **T**ransfer **P**rotocol), WAP (**W**ireless **A**pplication **P**rotocol), mPRM. Ferner ist ein GUI-Bundle 408 vorgesehen, welches die Dienste der im Weiteren beschriebenen GUI-Schicht bereitstellt. Mittels eines ebenfalls vorgesehenen Portal-Bundles 409 werden die im Weiteren beschriebenen Dienste im Rahmen des Gateway-Portals bereitgestellt. Ferner ist ein SMS-Bundle 410 vorgesehen, welches einen Kurznachrichtendienst (**S**hort **M**essage **S**ervice, SMS-Dienst) bereitstellt sowie ein WAP-Bundle 411, das die Kommunikationsmechanismen zur Kommunikation gemäß dem WAP-Protokoll ermöglicht.

Die Bundles 401, 402, 403, 404, 405, 406, 407, 408, 409, 410 sind jeweils derart eingerichtet, dass sie die im Weiteren beschriebene jeweilige Funktion, das heißt den jeweiligen Dienst, implementiert haben und somit bereitstellen.

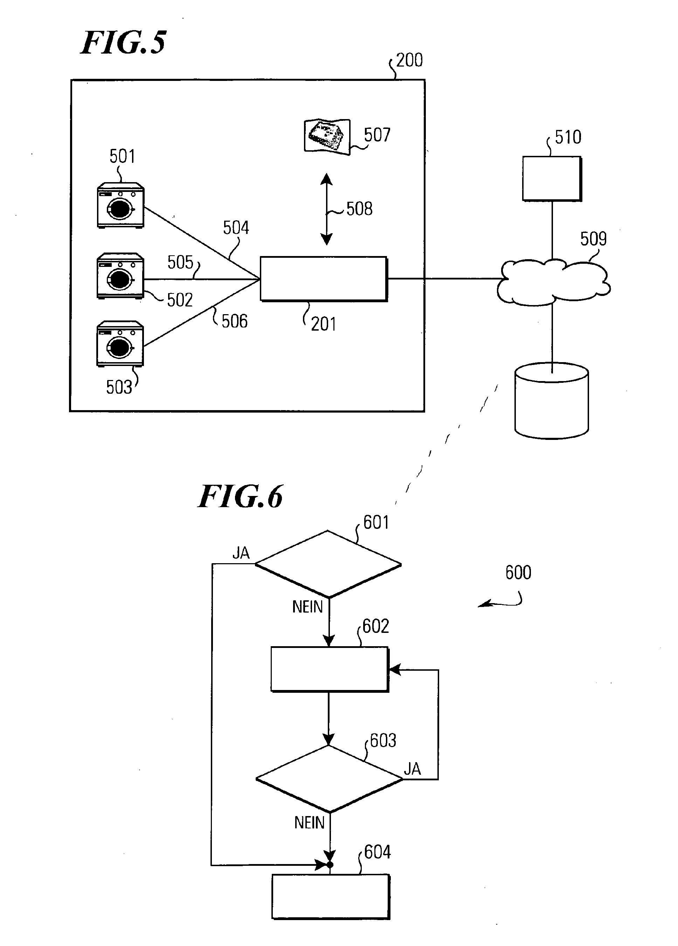

**Fig.5** zeigt das erfindungsgemäße System in vereinfachter Darstellung.

Die Gebäude-Gateway-Rechnervorrichtung 201 ist mit den zu steuernden Geräten 501, 502, 503 über Kommunikationsverbindungen 504, 505, 506, gemäß diesem Ausführungsbeispiel über eine Powerline-Kommunikationsverbindung und über ein EHS-Kommunikationsprotokoll steuernd gekoppelt. Die Geräte 501, 502, 503 sind gemäß dieser Ausführungsform Waschmaschinen.

Die externe Steuereinheit 507 gemäß **Fig.5** ist über eine Internet/Intranet-Kommunikationsverbindung 508 direkt mit der Gebäude-Gateway-Rechnervorrichtung 201 gekoppelt, wobei der Begriff "direkt" derart zu verstehen ist, dass die Kommunikationsverbindung 508 nicht über das öffentliche Kommunikationsnetz 509 aufgebaut ist, über welches öffentliche Kommunikationsnetz 509 ein Server-Rechner 510 mit der Gebäude-Gateway-Rechnervorrichtung 201 gekoppelt ist, um diese zu verwalten.

Wie oben beschrieben, sind die zu steuernden Geräte unter Verwendung des EHS-Kommunikationsprotokolls über eine Powerline-Kommunikationsschnittstelle mit der Gebäude-Gateway-Rechnervorrichtung 201 gekoppelt.

Um eine eindeutige Adressierung der jeweiligen zu steuernden Geräte innerhalb eines Gebäudes 200 zu ermöglichen, wird gemäß diesem Ausführungsbeispiel, wie im Weiteren näher erläutert, jedem zu steuernden Gerät, welches an das lokale Gebäudenetzwerk, als die Powerline-Kommunikationsverbindung angeschlossen ist, eine eindeutige Adresse zugeordnet. Die eindeutige Adresse wird im Weiteren als Gebäudeadresse bezeichnet.

Unter einer Gebäudeadresse ist eine für das Gerät in dem Gebäude lokal eindeutige Adresse zu dessen Identifizierung zu verstehen.

Die Gebäudeadresse wird von dem Gerät, welches als erstes an das lokale Gebäudenetzwerk angeschlossen wird, erzeugt und wird an alle anderen Geräte, welche zu einem späteren Zeitpunkt an das lokale Gebäudenetzwerk angeschlossen werden, verteilt.

Wie in **Fig.6** angegeben ist, wird von der Gebäude-Gateway-Rechnervorrichtung 201 in einem ersten Schritt zu dem Zeitpunkt, wenn die Gebäude-Gateway-Rechnervorrichtung 201 an das Steuerungssystem zum ersten Mal angeschlossen wird, versucht, die Gebäudeadresse von einem zu steuernden Gerät in dem Gebäude 200 zu erhalten (Schritt 601).

Wie in dem Ablaufdiagramm 600 angegeben ist, wird für den Fall, dass die Gebäude-Gateway-Rechnervorrichtung 201 keine Gebäudeadresse von einem anderen EHSfähigen zu steuernden Gerät erhält, eine neue Gebäudeadresse erzeugt (Schritt 602) und anschließend wird überprüft, ob diese neu generierte Gebäudeadresse schon existiert (Schritt 603).

Ist dies der Fall, so wird in Schritt 602 verzweigt und es wird eine neue Gebäudeadresse erzeugt und wiederum überprüft, ob diese dann erzeugte Gebäudeadresse ebenfalls schon existiert. Diese Schleife wird solange fortgesetzt, bis von der Gebäude-Gateway-Rechnervorrichtung 201 eine Gebäudeadresse generiert worden ist, die noch nicht existiert.

Ist eine solche gefunden, so wird die erzeugte Gebäudeadresse dem Gerät zugeordnet und gespeichert (Schritt 604).

Wird in dem ersten Schritt (Schritt 601) schon eine Gebäudeadresse erhalten, so wird unmittelbar in Schritt 604 verzweigt und die erhaltene Gebäudeadresse wird dem Gerät zugeordnet und gespeichert.

Nachdem die Gebäude-Gateway-Rechnervorrichtung 201 eine Gebäudeadresse für sich selbst ermittelt hat, erfasst sie diejenigen Geräte, welche schon an das System, das heißt anders ausgedrückt an das lokale Gebäudenetzwerk angeschlossen sind.

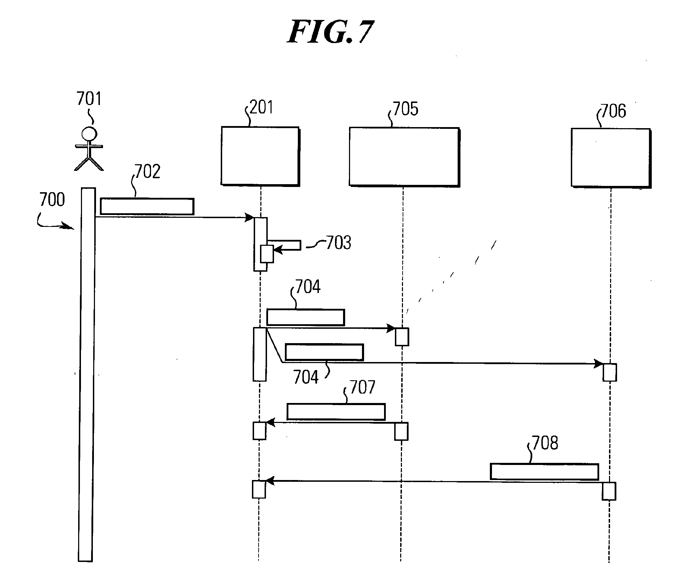

Dieser Vorgang ist in dem Nachrichtenflussdiagramm 700 in **Fig.7** näher dargestellt.

Ein Benutzer 701 kontaktiert über eine externe Steuereinheit die Gebäude-Gateway-Rechnervorrichtung 201, welcher Schritt mit einer Kontaktierungsnachricht 702 in **Fig.7** dargestellt ist.

Gemäß dem in **Fig.6** dargestellten Verfahren generiert die Gebäude-Gateway-Rechnervorrichtung 201 eine eigene Gebäudeadresse für die externe Steuereinheit (Schritt 703) und sendet anschließend eine Anfragenachricht 704 an alle an das lokale Gebäudenetzwerk angeschlossenen Geräte 705, 706, welche in Reaktion auf die Anfragenachricht 704 eine Antwortnachricht 707, 708 an die Gebäude-Gateway-Rechnervorrichtung 201 zurücksenden, mit welcher Antwortnachricht 707, 708 die Geräte 705, 706 ihre Präsenz innerhalb des Steuerungssystems anzeigen.

Wird ein neues zu steuerndes Gerät an das lokale Gebäudenetzwerk und darüber an die Gebäude-Gateway-Rechnervorrichtung 201 angeschlossen, so wird gemäß dem in **Fig.6** dargestellten Verfahren dem jeweiligen neuen Gerät eine eigene Gebäudeadresse zugeordnet. Um dies zu ermöglichen, wird die Gebäude-Gateway-Rechnervorrichtung 201 von dem Benutzer 701 in einen Gebäudeadressen-Verteilungsmodus umgeschaltet, in welchem Modus das neu zu installierende Gerät eine neue für dieses Gerät einzigartige und eindeutige Gebäudeadresse von der Gebäude-Gateway-Rechnervorrichtung 201 erhalten kann.

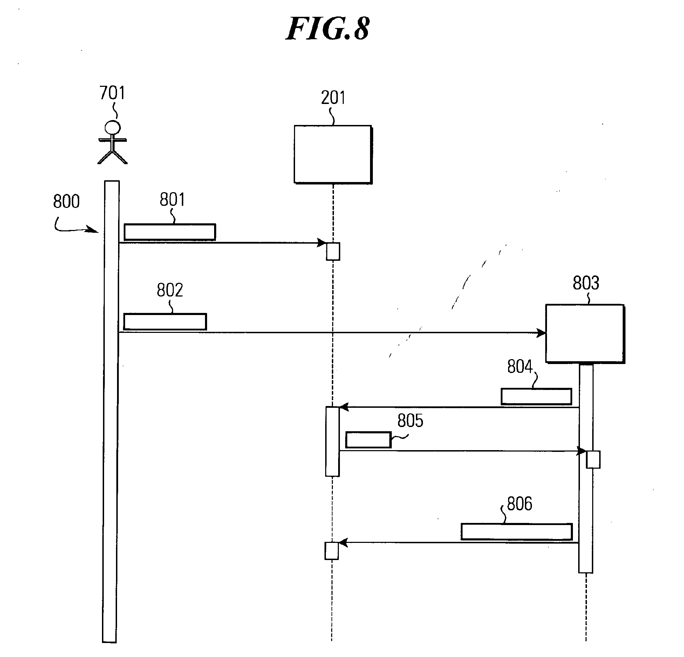

**Fig.8** zeigt in einem Nachrichtenflussdiagramm 800 die Vorgehensweise, bei der der Benutzer 701 mittels einer Gebäudeadressen-Verteiiungsnachricht 801 an die Gebäude-Gateway-Rechnervorrichtung 201 das Umschalten in den Gebäudeadressen-Verteilungsmodus bewirkt, in welchem die Gebäude-Gateway-Rechnervorrichtung 201 ihre eigene Gebäudeadresse für eine vorgegebene Zeitdauer an alle an das lokale Gebäudenetzwerk angeschlossenen Geräte über das lokale Gebäudenetzwerk aussendet.

Nach Aussenden der Gebäudeadresse schließt der Benutzer 701 das Gerät an das lokale Gebäudenetzwerk an und es wird eine Anmeldenachricht 802 von der externen Steuereinheit an das neue zu steuernde Gerät 803 gesendet, woraufhin das neue zu steuernde Gerät 803 eine Gebäudeadressen-Anforderungsnachricht 804 an die Gebäude-Gateway-Rechnervorrichtung 201 sendet, welche gemäß dem in **Fig.6** dargestellten Verfahren eine neue Gebäudeadresse für das neue zu steuernde Gerät 803 erzeugt und die neu erzeugte Gebäudeadresse in einer Gebäudeadressen-Nachricht 805 an das zu steuernde Gerät 803 übermittelt. Anschließend sendet das zu steuernde Gerät 803 bei Empfang einer Gebäudeadresse eine Antwortnachricht 806 an die Gebäude-Gateway-Rechnervorrichtung 201, mittels welcher die Präsenz des Geräts 803 in dem Steuerungssystem angegeben wird.

Nachdem die Gebäudeadressen den in dem Steuerungssystem und an das lokale Gebäudenetzwerk angeschlossenen zu steuernden Geräte zugeordnet worden sind, und alle zu steuernden Geräte von der Gebäude-Gateway-Rechnervorrichtung 201 erfasst worden sind, registriert sich die Gebäude-Gateway-Rechnervorrichtung 201 bei den angeschlossenen zu steuernden Geräten, um Zugang zu den jeweiligen Funktionen der Geräte zu erhalten.

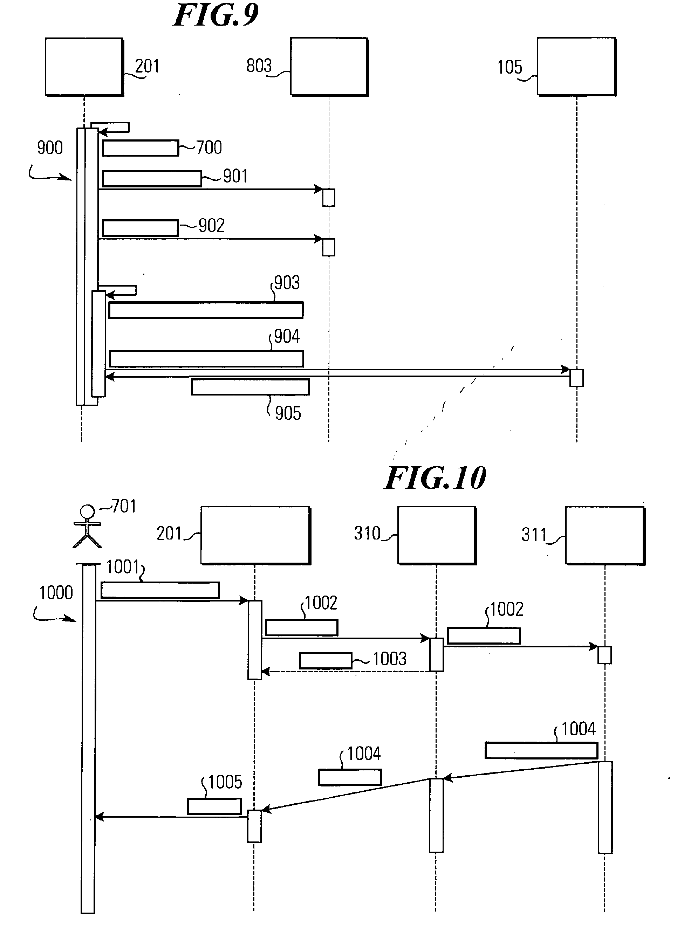

Gemäß diesem Ausführungsbeispiel werden von den Geräten mittels der Gebäude-Gateway-Rechnervorrichtung 201 folgende Informationen als Identifizierungsangabe ausgelesen (Schritt 901) und in der Gebäude-Gateway-Rechnervorrichtung 201 gespeichert (vgl. **Fig.9**):
- eine Angabe über den Hersteller des Haushaltsgeräts, beispielsweise ob es sich um ein Gerät der Firma Siemens oder der Firma Robert Bosch GmbH handelt,
- eine Angabe über die Geräteklasse, das heißt beispielsweise eine Angabe darüber, ob es sich bei dem Gerät um eine Waschmaschine, einen Herd, einen Wäschetrockner, einen Kühlschrank oder einen Gefrierschrank handelt,
- eine Angabe über den Gerätetyp, das heißt beispielsweise eine Angabe darüber,
   • ob es sich bei einer Waschmaschine um eine Frontlader-Waschmaschine oder eine Toplader-Waschmaschine handelt,
   • ob es sich bei einem Herd um einen Herd inklusive Kochfeld, um ein Standgerät oder um Einbausets für die Küchenmodernisierung handelt,
   • ob es sich bei einem Geschirrspüler um ein Einbaugerät, um ein Standgerät zum Anstellen oder um ein Standgerät zum Unterbauen unter ein Regal handelt,
   • ob es sich bei einem Kühlschrank und/oder einem Gefrierschrank um ein Einbaugerät oder um ein Standgerät handelt,
- eine Angabe über die Gerätevariante des jeweiligen Haushaltsgeräts,
   • beispielsweise bei einer Waschmaschine die Angabe über das Fassungsvermögen, über unterschiedliche unterstützte Schleuderzahlen, über die Energieeffizienz oder andere besondere Ausstattungsmerkmale wie unterschiedliche Waschprogramme oder spezielle Optionen, das heißt Funktionen der Waschmaschine,
   • bei einem Herd beispielsweise eine Angabe darüber, welche Farbe das Gerät hat, die Breite der Standgeräte, ob es sich um ein Universal-Heizsystem oder ein konventionelles Heizsystem handelt oder weitere besondere Ausstattungsmerkmale,
   • bei einem Geschirrspüler beispielsweise die Angabe, welche Farbe das Gerät hat, welche Breite oder andere Ausstattungsmerkmale,
   • bei einem Kühlschrank und/oder einem Gefrierschrank beispielsweise die Angabe darüber, welche Energieeffizienz das Gerät aufweist, welche Farbe das Gerät hat sowie welche Breite das Gerät aufweist,
- eine Angabe darüber, welche Hardware und welche Software, insbesondere welche Version der jeweiligen Hardware bzw. Software, jeweils in dem Haushaltsgerät installiert ist.

Basierend auf der oben beschriebenen eingelesenen Information wird von der Gebäude-Gateway-Rechnervorrichtung 201 ein geeigneter Gerätetreiber, eingerichtet als gerätespezifisches OSGI-Bundle, ausgewählt (Schritt 902). Diese Auswahl erfolgt gemäß dem bekannten in dem OSGI-Standard definierten Mechanismus.

Wenn kein passender Gerätetreiber als OSGI-Bundle in dem Speicher der Gebäude-Gateway-Rechnervorrichtung 201 gefunden worden ist (Schritt 903), so wird eine Download-Anfragenachricht 904 an den Server-Rechner 105 übermittelt und ein geeignetes gerätespezifisches Treiber-Bunde wird in einer Antwortnachricht 905 von dem Server-Rechner 105 an die Gebäude-Gateway-Rechnervorrichtung 201 übertragen und dort gespeichert.

Im Weiteren wird anhand eines weiteren Nachrichtenflussdiagramms 1000 (vgl. **Fig.10**) die Verarbeitung eines von einem Benutzer eingegebenen Befehls und der darauf folgenden Benachrichtigung des zu steuernden Geräts 311 durch die Gebäude-Gateway-Rechnervorrichtung 201 erläutert.

Wird von dem Benutzer 701 über die externe Steuereinrichtung an die Gebäude-Gateway-Rechnervorrichtung 201 ein Befehl, gemäß diesem Ausführungsbeispiel ein Befehl 1001 zum Starten einer Waschmaschine übermittelt, so wird von der Gebäude-Gateway-Rechnervorrichtung 201 eine Befehlsnachricht 1002 an das erste Powerline-Modem 310 gesendet und von diesem an das zweite Powerline-Modem (nicht dargestellt) weitergeleitet, über welches die Befehlsnachricht 1002 dem zu steuernden Gerät 311 zugeführt wird.

In einer lokalen ersten Bestätigungsnachricht 1003 wird unmittelbar nach Empfang der Befehlsnachricht 1002 von dem ersten Powerline-Modem 310 der Gebäude-Gateway-Rechnervorrichtung 201 bestätigt, dass die Befehlsnachricht an das zweite Powerline-Modem, welches dem jeweils zu steuernden Gerät 803 zugeordnet ist, ohne Kollision bei der Datenübertragung übermittelt worden ist.

Ferner wird nach Erhalt der Befehlsnachricht 1002 auf der Seite des zu steuernden Geräts 311 von diesem eine zweite Bestätigungsnachricht 1004 gebildet und über die Powerline-Kommunikationsverbindung an das erste Powerline-Modem 310 übermittelt, welches die zweite Bestätigungsnachricht 1004 an die Gebäude-Gateway-Rechnervorrichtung 201 weiterleitet, welche in einer Benutzernachricht 1005 die externe Steuereinheit über den Zugang der zweiten Bestätigungsnachricht 1004 und damit über den Empfang der Befehlsnachricht 1002 auf der Seite des zu steuernden Geräts 311 benachrichtigt.

Unter Verwendung der sogenannten Pushlet-Technologie können von dem jeweils zu steuernden Gerät 311 auf der Benutzeroberfläche der externen Steuereinheit, welche gemäß dem Ausführungsbeispiel unter Verwendung eines HTTP-Browser-Client-Programms ausgestaltet ist, von dem zu steuernden Gerät 311 erzeugte Daten bereitgestellt werden.

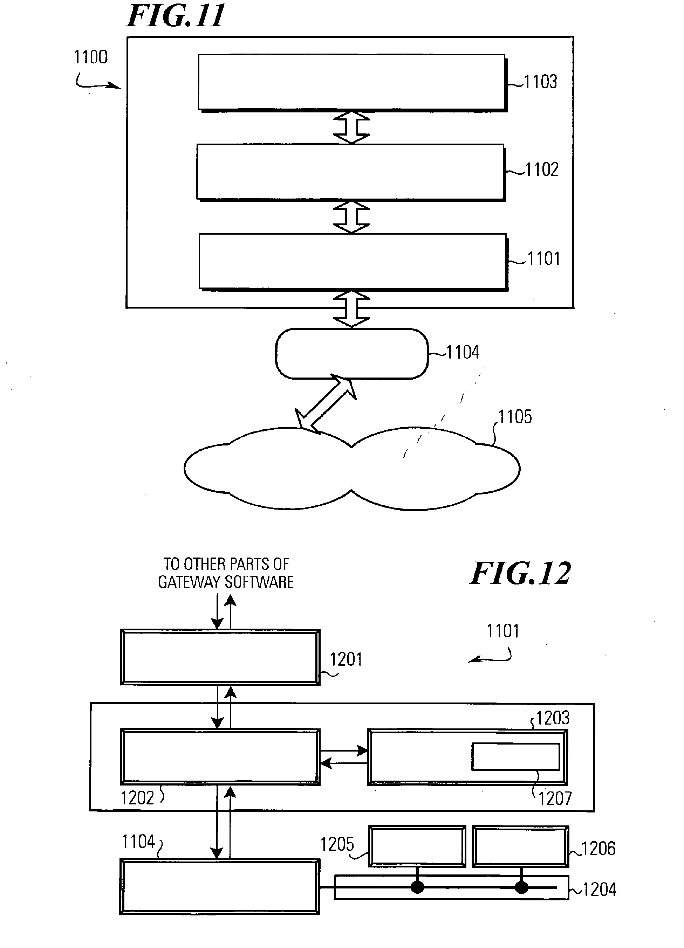

**Fig.11** zeigt die logische Struktur der in der Gebäude-Gateway-Rechnervorrichtung 201 implementierten Computerprogrammelemente in Form eines Kommunikationsschichtenmodells 1100.

In der Gebäude-Gateway-Rechnervorrichtung 201 ist eine EHS-Schicht 1101, eine darüber liegende, das heißt die Dienste der EHS-Schicht 1101 in Anspruch nehmende Gerätetreiber-Schicht 1102 angeordnet und darüber, die Dienste der Gerätetreiber-Schicht 1102 in Anspruch nehmende GUI-Schicht (Graphical User Interface-Schicht) 1103.

Über die EHS-Schicht 1101 wird ein Trialog-EHS-Modem 1104 als erstes Powerline-Modem 310 gesteuert, welches mit dem Powerline-Kommunikationsnetz 1105 gekoppelt ist, worüber eine Powerline-Kommunikationsverbindung mit dem zweiten Powerline-Modem 311 aufgebaut werden kann.

**Fig.12** zeigt den Aufbau der EHS-Schicht 1101 im Detail.

Die EHS-Schicht enthält folgende 3 Komponenten:
- Gerätetreiber-Objekte 1201 zum Ansteuern des jeweils zu steuernden Geräts, z.B. einer Waschmaschine, eines Herdes, einer Spülmaschine, etc.,
- eine mit den Gerätetreiber-Objekten 1201 gekoppelte EHS-Kommunikationskomponente 1202, sowie
- eine mit der EHS-Kommunikationskomponente 1202 gekoppelte EHS-Steuerungskomponente 1203.

Die EHS-Kommunikationskomponente 1202 ist ferner über eine serielle Schnittstelle, gemäß diesem Ausführungsbeispiel über eine RS232-Schnittstelle mit dem ersten Powerline-Modem 1104 gekoppelt und darüber und über das Powerline-Kommunikationsnetzwerk 1204 als lokales Gebäudenetzwerk mit den ebenfalls an das Powerline-Kommunikationsnetzwerk 1204 angeschlossenen zu steuernden Geräten 1205, 1206.

Für jedes zu steuernde Gerät 1205, 1206 wie beispielsweise einem Kühlschrank oder einer Waschmaschine ist jeweils ein Gerätetreiber-Bundle- im Weiteren auch als Gerätetreiber-Bundle-Computerprogramm bezeichnet - vorgesehen und diesem zugeordnet.

Ein solches Gerätetreiber-Bundle kann anschaulich als ein virtuelles Software-Gerät angesehen werden.

Um Nachrichten von der Gebäude-Gateway-Rechnervorrichtung 201 an das erste Powerline-Modem 1104, das heißt gemäß dem Ausführungsbeispiel an das EHS-Modem 1104 zu senden oder von diesem Nachrichten zu empfangen, nutzt das Gerätetreiber-Bundle-Computerprogramm Dienste, die ein anderes OSGI-Bundle zur Verfügung stellt, nämlich ein EHS-Kommunikations-Bundle, welches die EHS-Kommunikationskomponente 1202 implementiert.

Somit stellen zusammenfassend die Gerätetreiber-Bundle 1201 jeweils eine für das jeweilige zu steuernde Gerät spezifische Funktionalitäten bereit.

Zur Kommunikation nutzt das jeweilige Gerätetreiber-Bundle eine Schnittstelle der Anwendungsschicht zu der EHS-Kommunikationskomponente, welche als EHS-Kommunikations-Bundle realisiert ist.

Das EHS-Kommunikations-Bundle 1202 ist mit dem EHS-Modem 1104 gekoppelt.

Das Format des verwendeten EHS-Kommunikationsprotokolls wird von dem EHS-Kommunikations-Bundle 1202 umgewandelt in das EHS-Anwendungsschicht-Format und darüber in die von der EHS-Anwendungsschicht bereitgestellten Dienste.

Anders ausgedrückt bedeutet dies, dass es für die Gerätetreiber-Bundle 1202 transparent ist, welches Modem tatsächlich an die Gebäude-Gateway-Rechnervorrichtung 201 angeschlossen ist, da diese die EHS-Dienste nutzen, die von dem EHS-Kommunikations-Bundle 1202 bereitgestellt werden, das heißt Dienste der Anwendungsschicht.

Von dem EHS-Kommunikations-Bundle 1202 werden somit die bereitgestellten Dienste auf das jeweils verwendete EHS-Modem, gemäß dem Ausführungsbeispiel in das Format, welches von dem vorgesehenen Trialog-EHS-Modem 1104 verwendet wird, umgewandelt. Anders ausgedrückt ist durch das EHS-Kommunikations-Bundle 1202 das von dem Trialog-EHS-Modem 1104 verwendete Kommunikationsprotokoll implementiert.

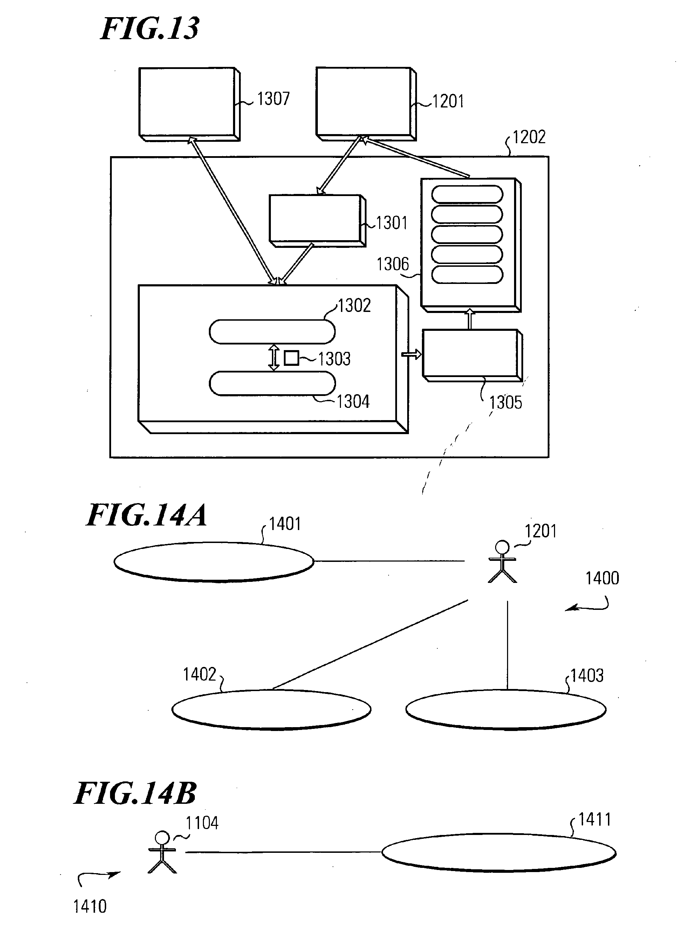

**Fig.13** zeigt den Aufbau des EHS-Kommunikations-Bundles 1202 im Detail.

Von dem Gerätetreiber-Bundle 1201 empfängt das EHS-Kommunikations-Bundle 1202 an die zu steuernden Geräte zu sendenden Nachrichten in einer Sendewarteschlange 1301 und liest aus dieser Byte für Byte die zu sendende Information. Mittels eines Byte-zu-Frame-Wandlers 1302 werden die einzelnen Bytes in ein Datenpaket, im Weiteren auch bezeichnet als Frame, zusammengeführt. Die gebildeten Frames 1303 werden in einem Frame-zu-EHS-Befehls-Wandler 1304 in das tatsächlich von dem EHS-Kommunikations-Bundle 1202 an das zu steuernde Gerät über die RS232-Schnittstelle gesendeten EHS-Befehls umgewandelt.

Die RS232-Schnittstelle ist bidirektional, das heißt das EHS-Kommunikations-Bundle 1202 empfängt über die RS232-Schnittstelle auch Nachrichten von dem EHS-Modem 1104 und speichert diese empfangenen Daten in einer Empfangs-Warteschlange 1305.

Über einen Ereignis-Erfassungsmechanismus 1306 werden in der Empfangswarteschlange 1305 gespeicherte Nachrichten, beispielsweise in den Geräten aufgetretene Ereignismeldungen ausgelesen und verarbeitet.

Als Reaktion auf eine empfangene Nachricht ist beispielsweise eine Antwort
- als lokale erste Bestätigungsnachricht,
- als zweite Bestätigungsnachricht,
- als Fehlermeldung,
- als Anzeigenachricht, oder
- als Registriernachricht,
   vorgesehen, welche an das Gerätetreiber-Bundle 1201 weitergeleitet wird.

Ferner werden Dienste von einem allgemeinen Javax.comm-Bundle 1307, welches anschaulich einen RS232-Schnittstellentreiber bereitstellt, verwendet.

Alternativ kann anstelle des Javax.comm-Bundles 1307 ein Schnittstellen-spezifisches Bundle verwendet werden, welches die entsprechenden benötigten Dienste zur Kommunikation über eine entsprechende externe Schnittstelle, vorzugsweise eine bitserielle Schnittstelle oder eine bitparallele Schnittstelle, anschaulich die benötigte Schnittstellentreiber-Funktionalität, bereitstellt.

Sobald ein neues zu steuerndes Gerät in das System eingebracht wird, das heißt an das lokale Gebäudenetzwerk angeschlossen wird, weist die EHS-Steuerungskomponente 1203 dem zu steuernden Gerät dynamisch eine Gebäudeadresse zu.

Ferner wird von der EHS-Steuerungskomponente 1203 eine OSGI-Geräte-Verwaltungseinheit kontaktiert, um die benötigten Gerätetreiber-Bundle-Computerprogramme anzufordern und zu installieren.

Um das zu ermöglichen, enthält das EHS-Steuerungs-Bundle, welches die EHS-Steuerungskomponente 1203 bildet, einen Basistreiber 1207, der einen einfachen EHS-Gerätetreiber darstellt, mittels dem das Auslesen einer Geräte-Identifikationsangabe möglich ist und mit dem es ferner möglich ist, die Ermittlung der benötigten Gerätetreiber-Bundle zu initiieren.

Es ist in diesem Zusammenhang anzumerken, dass das EHS-Steuerungs-Bundle 1203 unabhängig ist von dem jeweils verwendeten EHS-Modem, allgemein von dem jeweils verwendeten Modem oder der tatsächlich verwendeten Kommunikationsprotokolle und Übertragungsverfahren auf der physikalischen Schicht auf der Seite des lokalen Gebäudenetzwerkes.

Der Basistreiber ist somit eine Komponente, die in dem EHS-Steuerungs-Bundle 1203 enthalten ist.

Wenn ein neues Gerät an das lokale Gebäudenetzwerk angeschlossen wird, stößt das EHS-Steuerungs-Bundle 1203 den Basistreiber an, so dass dieser den 21 Byte langen Identifikationscode, d.h. die oben beschriebene Identifizierungsangabe, aus dem Speicher des zu steuernden Geräts ausliest.

Unter Verwendung der Identifizierungsangabe ermittelt die EHS-Steuerungskomponente 1203 das geeignete Gerätetreiber-Bundle 1201, und ermittelt dieses gegebenenfalls von dem Server-Rechner.

Ferner wird mittels des Basistreibers das jeweils zu steuernde Gerät in der Gebäude-Gateway-Rechnervorrichtung 201 registriert.

Die Kommunikation zwischen dem EHS-Steuerungs-Bundle 1203 und dem EHS-Kommunikations-Bundle 1202 ist bidirektional.

Von dem EHS-Steuerungs-Bundle 1203 werden von dem EHS-Kommunikations-Bundle 1202 gesendete Ereignisse empfangen und an dieses werden Befehle zur Weiterleitung an das EHS-Modem 1104 gesendet.

Die durch das EHS-Steuerungs-Bundle 1203 empfangenen Ereignisse sind Registrierungsereignisse, die erzeugt werden, wenn ein neues zu steuerndes Gerät in das lokale Gebäudenetzwerk, gemäß diesem Ausführungsbeispiel an das EHS-Netzwerk angeschlossen wird.

Wenn ein solches Ereignis durch das EHS-Steuerungs-Bundle 1203 empfangen wird, wird der Basistreiber davon benachrichtigt und es werden die oben beschriebenen Aktionen von dem Basistreiber durchgeführt.

Die Gerätetreiber-Bundle 1201 nutzen das EHS-Kommunikations-Bundle 1202 zur Kommunikation mit der Hardware in dem lokalen Gebäudenetzwerk.

Wenn ein Gerätetreiber-Bundle 1201 angesteuert wird, um vorgegebene Aktionen durchzuführen, beispielsweise das Starten eines zu steuernden Geräts, das Programmieren eines zu steuernden Geräts, oder eine Statusabfrage über den Zustand eines zu steuernden Geräts, etc., wird das EHS-Kommunikations-Bundle 1202 verwendet, um eine Kommunikationsprotokoll-abhängige Nachricht an das zu steuernde Gerät zu senden.

Ferner kann sich das Gerätetreiber-Bundle 1201 in der EHS-Steuerungskomponente 1203 registrieren lassen, so dass vorgegebene Ereignisse von der EHS-Steuerungskomponente an die Gerätetreiberkomponente 1201 weitergeleitet werden, beispielsweise Statusinformation, die von dem zu steuernden Gerät an die Gebäude-Gateway-Rechnervorrichtung 201 und somit an die EHS-Kommunikationskomponente 1202 und darüber an das EHS-Steuerungs-Bundle 1203 gesendet wird.

In den **Fig.14A** und **Fig.14B** ist der Nachrichtenaustausch der EHS-Schicht 1101 mit den jeweiligen externen Modulen, einerseits mit der Gerätetreiber-Schicht 1102, das heißt den Gerätetreiber-Bundles 1201 (vgl. **Fig.14A**) und mit dem EHS-Modem 1104 andererseits (vgl. **Fig.14B**) dargestellt.

Wie in dem Nachrichtenflussdiagramm 1400 in **Fig.14A** dargestellt ist, werden aufgrund einer Vorgabe, das heißt einer von dem jeweiligen Gerätetreiber-Bundle 1201 gesendeten Nachricht folgende Aktionen durchgeführt:
- das Gerätetreiber-Bundle 1201 wird für vorgegebene EHS-Ereignisse des jeweils zu steuernden Geräts registriert, so dass bei Auftreten des Ereignisses dieses von der EHS-Steuerungskomponente 1203 an das Gerätetreiber-Bundle 1201 weitergeleitet wird (Block 1401);
- ferner kann die Registrierung für ein oder mehrere vorgegebene EHS-Ereignisse gelöscht werden (Block 1402); und
- es können EHS-Befehle ausgeführt werden (Block 1403).

Wie in dem Blockdiagramm 1410 in **Fig.14B** dargestellt, wird ein Ereignis, welches von einem zu steuernden Gerät an die Gebäude-Gateway-Rechnervorrichtung 201 gesendet wird, von dem EHS-Modem 1104 an die EHS-Kommunikationskomponente 1203 gesendet (Block 1411).

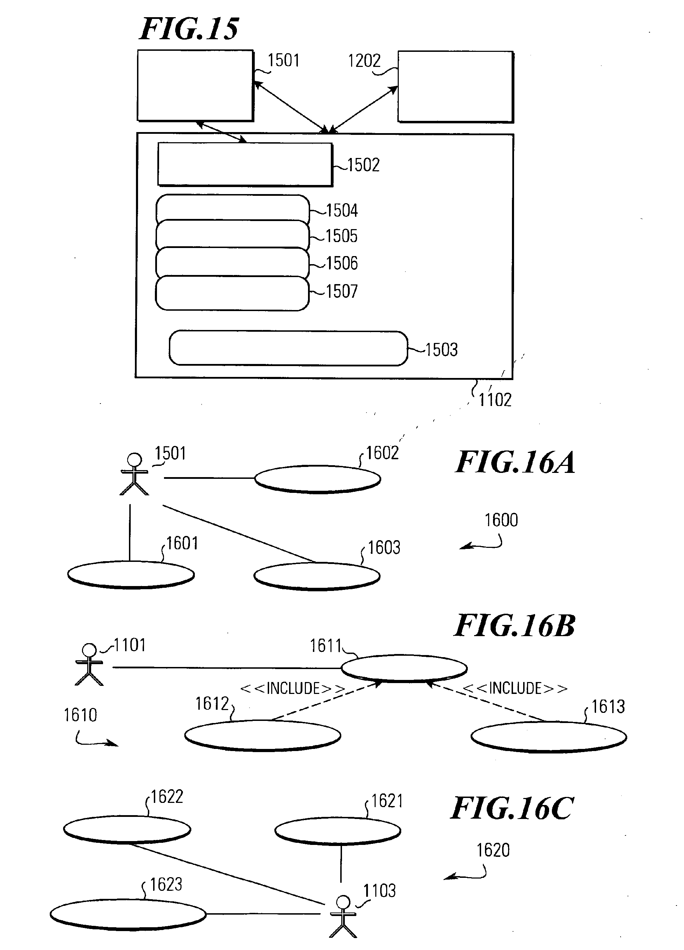

**Fig.15** zeigt in einem Blockdiagramm 1500 den Aufbau der Gerätetreiber-Schicht 1102 im Detail.

In der Gerätetreiber-Schicht 1102 ist die gesamte Steuerungslogik zur Steuerung der jeweils zu steuernden Geräte enthalten.

Mindestens ein gerätespezifischer Gerätetreiber ist in Form von Gerätetreiber-Bundles zumindest einem Teil der registrierten zu steuernden EHS-Gerät zugeordnet, so dass es ermöglicht ist, dieses zu steuern.

Die Gerätetreiber-Schicht 1102 stellt nicht nur die Dienste bereit zum Ermitteln von Informationen über den jeweiligen Zustand des zu steuernden Geräts oder das Ausführen von Befehlen an das jeweils zu steuernde Gerät, sondern auch das Verfahren zum Registrieren eines zu steuernden Gerätes.

Unter Verwendung der jeweiligen Gerätetreiber wird ein jeweils zu steuerndes Gerät oder eine Klasse von Geräten, beispielsweise ein Kühlschrank, eine Waschmaschine etc. gesteuert.

Der Lebenszyklus der zu steuernden Geräte, welche logisch in der Gerätetreiber-Schicht 1102 registriert sind sowie der Lebenszyklus der Gerätetreiber-Bundles selbst werden von einer OSGI-Geräte-Verwaltungseinheit 1501 verwaltet.

Von dieser werden ebenso die Wechselbeziehungen und Wirkbeziehungen zwischen den zu steuernden Geräten und den Gerätetreibern verwaltet.

Mittels der OSGI-Geräte-Verwaltungseinheit 1501, welche gemäß dem OSGI-Standard ausgestaltet ist, werden an das lokale Gebäudenetzwerk angeschlossene Geräte, zugehörige Gerätetreiber und möglicherweise ein Speicherort, an dem die benötigten Gerätetreiber-Bundle zu finden, d.h. gespeichert sind, erfasst.

In einer Gerätetreiber-Lokalisierungseinheit 1502 ist ein Verfahren implementiert zum Ermitteln der jeweils benötigten und noch nicht in der Gebäude-Gateway-Rechnervorrichtung 201 enthaltenen gerätespezifischen Gerätetreiber.

Ferner ist eine Faktorisierungs-Registrierungseinheit 1503 vorgesehen.

Die Faktorisierungs-Registrierungseinheit 1503 instantiiert die benötigten Gerätemodellobjekte 1504, 1505, 1506, 1507, welche im Weiteren noch näher erläutert werden und bildet eine Verknüpfung von den Gerätemodell-Objekte 1504, 1505, 1506, 1507 zu den jeweiligen den Geräten und den Gerätemodell-Objekten 1504, 1505, 1506, 1507 zugeordneten Geräte-View-Objekten, welche die Mechanismen zur Darstellung von Information über das jeweilige Gerät auf einer graphischen Benutzeroberfläche bereitstellen.

Für jeden Typ eines zu steuernden Geräts ist jeweils ein Gerätemodell-Objekt 1504, 1505, 1506, 1507 - im Weiteren auch als Gerätemodell bezeichnet - als gerätespezifisches Objekt implementiert. In dem Gerätemodell 1504, 1505, 1506, 1507 wird die jeweilige Gerätefunktionalität des zu steuernden Geräts implementiert und der jeweils aktuelle Gerätezustand als Zustandsinformation bereitgestellt.

Das jeweilige Gerätemodell 1504, 1505, 1506, 1507 kommuniziert mit der EHS-Schicht 1101 und sendet Befehle an das jeweils zu steuernde Gerät und empfängt von diesem Ereignisse.

Für den Fall, dass ein herstellerspezifischer oder gerätespezifischer Gerätetreiber für ein zu steuerndes und an das lokale Gebäudenetzwerk angeschlossenes Gerät nicht ermittelt werden kann ist ein Universal-Gerätemodell als eigenes Objekt vorgesehen, vorzugsweise jeweils auf der Ebene einer Gerätekategorie, beispielsweise jeweils für eine Waschmaschine, einen Geschirrspüler, etc.

Das Universal-Gerätemodell stellt üblicherweise keine gerätespezifischen Funktionalitäten bereit, welche bei einem speziellen Gerätetyp an sich verfügbar wären.

Wenn ein neues zu steuerndes Gerät an das lokale Gebäudenetzwerk angeschlossen wird, generiert die Gerätetreiber-Schicht 1102 ein neues Geräte-View-Objekt unter Verwendung von registrierten GUI-Faktorisierungen, und bildet eine entsprechende Verknüpfung zu dem dem jeweiligen Geräte-View-Objekt zugeordnete Gerätemodell 1504 1505, 1506, 1507.

Ferner steuert die Gerätetreiber-Schicht 1102 alle Geräte des gleichen Typs in dem EHS-Netzwerk als lokalem Gebäudenetzwerk.

Die Gerätetreiber-Schicht 1102 erzeugt Gerätemodelle 1504, 1505, 1506, 1507 als eigene Objekte, welche die Gerätefunktionalitäten implementieren und speichert den aktuellen Gerätestatus für jedes neu an das lokale Gebäudenetzwerk angeschlossene zu steuernde Gerät.

Mittels des Gerätemodells 1504, 1505, 1506, 1507 wird eine graphische Benutzeroberfläche bereitgestellt, beispielsweise gemäß dem HTML-Standard oder dem WML-Standard.

In den **Fig.16A** bis **Fig.16C** ist die Kommunikation der Gerätetreiber-Schicht 1102 mit anderen externen Komponenten beschrieben.

**Fig.16A** zeigt in einem Blockdiagramm 1600 die Kommunikation mit der OSGI-Geräte-Verwaltungseinheit 1501. Unter Verwendung der OSGI-Geräte-Verwaltungseinheit 1501 werden in der Gebäude-Gateway-Rechnervorrichtung 201 benötigte, aber noch nicht vorhandene Gerätetreiber ermittelt (Block 1601), es wird ermittelt, ob benötigte Gerätetreiber schon in der Gebäude-Gateway-Rechnervorrichtung 201 gespeichert sind (Block 1602) oder es werden eventuell benötigte Gerätetreiber von der OSGI-Geräte-Verwaltungseinheit 1501 geladen (Block 1603).

Gemäß dem Blockdiagramm 1610 in **Fig. 16B** werden von der EHS-Schicht 1101 an die Gerätetreiber-Schicht 1102 unter Verwendung der EHS-Kommunikationskomponente 1202 von den zu steuernden Geräten übermittelte EHS-Ereignisse an die jeweils registrierten Objekte übermittelt (Block 1611).

Die von der EHS-Schicht 1101 übermittelten EHS-Events werden erfindungsgemäß in zwei Gruppen gruppiert, nämlich in die Geräteereignisse (Block 1612) und in die Registrierungsereignisse 1613.

Ein EHS-Geräteereignis 1612 ist beispielsweise das Empfangen einer zweiten Bestätigungsnachricht und einer entsprechenden Anzeigenachricht.

Tritt ein solches Ereignis auf, so leitet die Gerätetreiber-Schicht 1102 dieses Ereignis an das entsprechende Repräsentationsobjekt der im Weiteren näher beschriebenen GUI-Schicht 1103 weiter.

EHS-Registrierungsereignisse 1613 sind Ereignisse bezüglich eines registrierten zu steuernden Gerätes. Die Reaktion der Gerätetreiber-Schicht 1102 auf ein EHS-Registrierungsereignis ist die Registrierung einer entsprechenden Geräteschnittstelle von dem Basistreiber. Anschließend wird ein Gerätezugangsmechanismus aktiviert zum Ermitteln und Installieren eines geeigneten Gerätetreibers.

Die Kommunikation mit der GUI-Schicht 1103 ist in einem Blockdiagramm 1620 in **Fig.16C** dargestellt.

Die GUI-Schicht 1103 und die Gerätetreiber-Schicht 1102 kommunizieren miteinander unter Verwendung der so genannten Faktorisierungsmuster, anders ausgedrückt unter Verwendung der gebildeten Verknüpfungen zwischen einem jeweiligen Gerätemodellobjekt und dem diesem zugeordneten Geräte-View-Objekt.

Für jedes verwendete Format der graphischen Benutzeroberfläche in der GUI-Schicht 1103 oder dem jeweilig verwendeten Kommunikationsprotokoll der Anwendungsschicht für die jeweilige graphische Benutzeroberfläche, beispielsweise HTML oder WML, wird ein entsprechendes Repräsentationsobjekt, im Weiteren beispielsweise als HTML-Geräte-View-Objekt bezeichnet, erzeugt und registriert und einem entsprechenden Gerätemodell-Objekt zugeordnet. Dies wird unter Verwendung der GUI-Faktorisierungs-Dienste durchgeführt, die mit den Gerätetreibern mitgeliefert werden (Block 1621).

Wird von der GUI-Schicht 1103 eine Anforderung zum Ermitteln des Zustands des jeweils zu steuernden Gerätes erhalten, wird ein in der Empfangswarteschlange 1305 zwischengespeicherter Zustandswert an die GUI-Schicht 1103 übermittelt.

Wie oben beschrieben, wird der zwischengespeicherte Zustandswert erhalten aufgrund des jeweils letzten gerätespezifischen Ereignisses, das von dem zu steuernden Gerät an das EHS-Kommunikations-Bundle 1202 gesendet worden ist (Block 1622).

Ferner wird bei Empfang einer Befehlsanforderung, das heißt bei Empfang einer Befehlsnachricht von der GUI-Schicht 1103 durch die Gerätetreiber-Schicht 1102 ein entsprechender Befehl zur Ansteuerung des zu steuernden Gerätes gesendet und gleichzeitig an die GUI-Schicht eine Nachricht übermittelt, mit der angezeigt wird, dass die Befehlsanforderung verarbeitet wird (Block 1623).

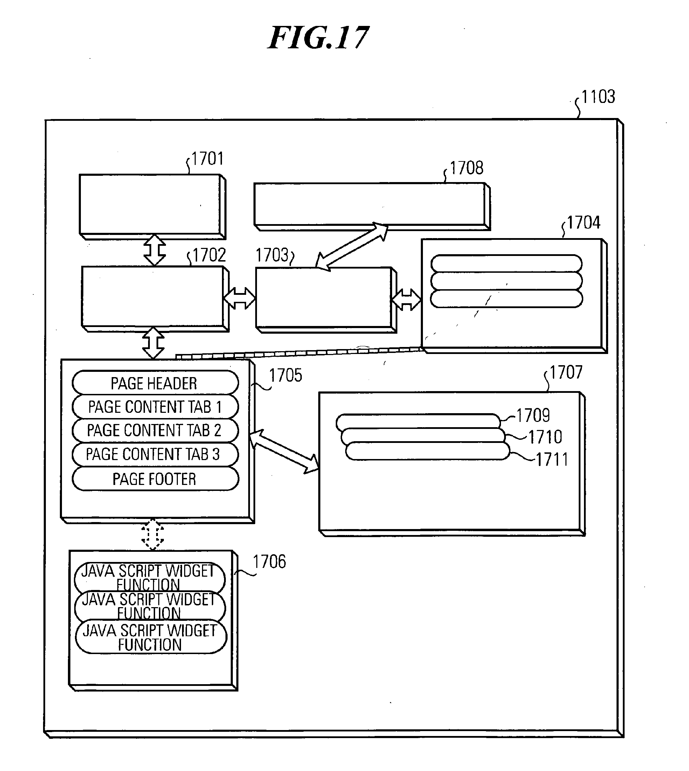

**Fig.17** zeigt den Aufbau der GUI-Schicht 1103 im Detail.

Die GUI-Schicht 1103 weist insbesondere folgende Komponenten auf:
- ein HTML/WML-Steuerungs-Servlet 1701,
- einen HTML/WML-Anfrageprozessor 1702,
- eine Geräteliste-Verwaltungseinheit 1703,
- eine Geräteliste 1704,
- ein HTML/WML-Geräte-View-Objekt 1705
- eine Widget-Bibliothek 1706
- eine XML-Gerätekonfigurationsdatei-Bibliothek 1707, und
- ein Ereignis-Benachrichtigungs-Servlet 1708.

Im Weiteren wird die Funktion der einzelnen Komponenten der GUI-Schicht 1103 näher erläutert.

Mittels des HTML/WML-Steuerungs-Servlets 1701 werden HTTP/WAP-Anfragenachrichten empfangen und es werden erzeugte Seiten gemäß dem HTML-Standard bzw. dem WML-Standard an die externe Steuereinheit und darüber an den Benutzer weitergegeben.

Der Anfrage-Prozessor 1702 parst, das heißt ermittelt, die nachgefragte URL-Adresse.

Ferner ermittelt er das Geräte-View-Objekt oder das jeweilige Modul, das die angefragte Seite von der Geräteliste-Verwaltungseinheit 1703 erzeugt. Ferner werden von dem Anfrageprozessor 1702 Anfrageobjekte und Antwortobjekte für das HTML/WML-Geräte-View-Objekt 1705 generiert und an dieses übertragen. Ferner wird das HTML/WML-

Geräte-View-Objekt 1705 von dem Anfrageprozessor 1702 aktiviert, um bei Bedarf einen Befehl an das jeweils zu steuernde Gerät zu senden oder den jeweils aktuellen Gerätestatus zu ermitteln. Ferner empfängt der Anfrageprozessor 1702 von dem HTML/WML-Geräte-View-Objekt 1705 die empfangene und dort generierte Seite gemäß dem HTML/WML-Format.

Die Geräteliste-Verwaltungseinheit 1703 stellt einen Dienst bereit, mittels dem alle Geräte-View-Objekte sich selbsttätig in die Geräteliste 1704 eintragen.

In der Geräteliste 1704 sind Zeiger auf die jeweiligen registrierten Geräte-View-Objekte 1705 enthalten.

Das HTML/WML-Geräte-View-Objekt 1705 erzeugt für das entsprechende Gerät die angefragten HTML-Seiten bzw. WML-Seiten für das jeweils zu steuernde Gerät.

In der Widget-Bibliothek 1706 sind alle Widgets in Form eines JS-Files gespeichert, die in dem jeweiligen HTTP-Dienst registriert sind.

In der XML-Gerätekonfigurations-Bibliothek 1707 sind die auf XML basierenden Konfigurationsdateien gespeichert, die einen gerätespezifischen Teil der benutzerseitigen externen Steuereinheit definieren. Jeder Folder auf der graphischen Benutzeroberfläche der jeweiligen externen Steuereinheit, welcher jeweils ein eigenes zu steuerndes Gerät repräsentiert, hat eine eigene ihm zugeordnete Konfigurationsdatei 1709, 1710, 1711.

Mittels des Ereignis-Benachrichtigungs-Servlets 1708 wird die HTTP-Verbindung mit dem jeweiligen Browser-Programm aufrechterhalten und an diesen werden die jeweiligen auftretendenden Ereignisse weitergeleitet.

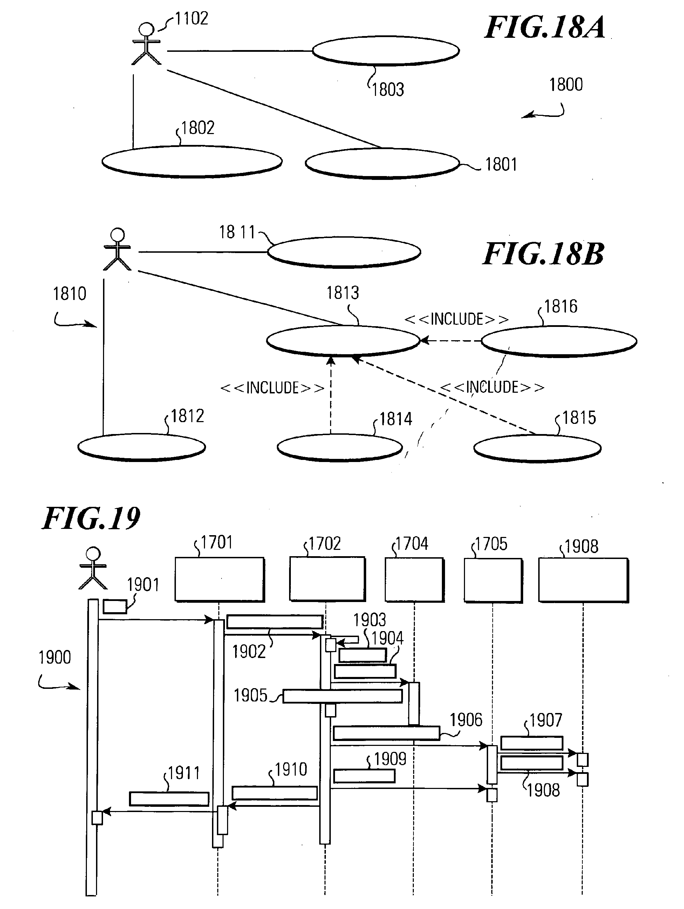

Die Kommunikation mit der Gerätetreiber-Schicht 1102 einerseits und einem Benutzer, das heißt einer externen Steuereinheit andererseits sind in dem Blockdiagrammen 1800 in **Fig.18A** bzw. 1810 in **Fig.18B** dargestellt.

Wird von einem Benutzer unter Verwendung der externen Steuereinheit ein Befehl eingegeben, so wird dieser an die GUI-Schicht, welche insbesondere die graphische Benutzeroberfläche an der externen Steuereinheit bereitstellt, durchgeführt (Block 1811).

Ferner werden dem Benutzer die jeweiligen Zustandsinformationen der über die externe Steuereinheit gesteuerten Geräte übermittelt, welche Zustandsinformationen von den jeweiligen Gerätetreiber-Objekten in der Gerätetreiber-Schicht 1102 ermittelt wird (Block 1812).

Ferner werden dem Benutzer über die externe Steuereinheit Konfigurationsdienste (Block 1813) bereitgestellt, gemäß diesem Ausführungsbeispiel insbesondere die Möglichkeit, eine gewünschte Sprache im Rahmen der Steuerung zu verwenden (Block 1814), vorgegebene Kurznachrichtennummern zum Empfangen kritischer Geräteereignisse zu definieren (Block 1815) sowie eigene benutzerdefinierte Gerätenamen zu vergeben (Block 1816).

Basierend auf einem Registrierungsereignis werden von der Gerätetreiber-Schicht 1102 Instanzen von Geräte-View-Objekten für jedes registrierte zu steuernde Gerät erzeugt (Block 1801) in **Fig.18A**.

Wenn ein zu steuerndes Gerät aus dem lokalen Gebäudenetzwerk entfernt wird, benachrichtigt die Gerätetreiber-Schicht 1102 die GUI-Schicht 1103 darüber und entfernt die Instanz des jeweiligen Geräte-View-Objekts (Block 1802).

Ferner wird von der Gerätetreiber-Schicht 1102 die GUI-Schicht 1103 von jedem Ereignis für das jeweilige spezifische zu steuernde Gerät, welches über die GUI-Schicht und darüber über die externe Steuereinheit verwaltet wird, benachrichtigt (Block 1803).

Im Weiteren wird die Vorgehensweise beschrieben, die durchgeführt wird, wenn ein neues zu steuerndes Gerät an das lokale Gebäudenetzwerk angeschlossen wird.

Der EHS-Basistreiber horcht auf dem lokalen Gebäudenetzwerk nach Registrierungsereignissen, die von dem EHS-Kommunikations-Bundle 1202 an den Basistreiber weitergeleitet werden. Wenn ein neues zu steuerndes Gerät an das lokale

Gebäudenetzwerk angeschlossen wird, wird ein Registrierungsereignis generiert und über das EHS-Modem an das EHS-Kommunikations-Bundle 1202 und darüber an den Basistreiber übermittelt.

Ein Basis-Geräte-Objekt wird instanziiert und von diesem wird von dem zu steuernden Gerät dessen 20 Byte lange Identifikationsangabe, die als Objekt-Benutzername verwendet wird, ausgelesen.

Der Basistreiber registriert anschließend einen Basis-Gerätedienst, welcher von der OSGI-Geräte-Verwaltungseinheit 1501 erfasst wird und es wird eine Anfrage zur Lokalisierung des jeweiligen benötigten Gerätetreibers an die Gerätetreiberlokalisierungskomponente übermittelt.

Die EHS-Lokalisierungskomponente ermittelt eine Liste von Gerätetreiber-Identifikationsangaben von Gerätetreibern, mit denen das jeweilige Gerät gesteuert werden kann und übermittelt diese Liste an den Basistreiber. Der geeignetste Gerätetreiber wird aus der Liste ausgewählt.

Die EHS-Lokalisierungskomponente erhält die Ortsangabe, das heißt den Pfad zu dem Speicher bzw. dem Server, der den jeweiligen Gerätetreiber bereitstellt. Ist ein gewünschter Gerätetreiber nicht erhältlich, so wird der Universal-Gerätetreiber installiert. Ist der gewünschte Gerätetreiber jedoch schon als Gerätetreiber-Bundle in der Gebäude-Gateway-Rechnervorrichtung 201 installiert, so wird der Gerätetreiber nicht noch einmal geladen, sondern es wird der ohnehin gespeicherte Gerätetreiber verwendet.

Anschließend wird ein für das jeweils zu steuernde Gerät gerätespezifisches Gerätemodell-Objekt erzeugt, welches sich in der EHS-Schicht 1101 registriert, so dass das Objekt vorgegebene Ereignisse von dem zu steuernde Gerät bereitgestellt bekommt, wenn die EHS-Schicht solche Ereignisse empfängt.

Im Weiteren wird anhand des Nachrichtenflussdiagramms 1900 in **Fig.19** der Nachrichtenfluss beschrieben für den Fall, dass ein Benutzer einen Befehl über die externe Steuereinheit eingibt.

Wenn der Benutzer auf einen Knopf oder ein Bedienelement der graphischen Benutzeroberfläche der externen Steuereinheit klickt, wird eine Befehlsnachricht 1901 von der externen Steuereinheit an das HTML/WML-Steuerungs-Servlet 1701 übertragen. Die gemäß dem HTML-Format kodierte Befehlsnachricht 1901, mit der beispielsweise ein zu steuerndes Gerät angeschaltet werden soll, wird von dem HTML/WML-Steuerungs-Servlet 1701 empfangen und von diesem werden Anfrageobjekte und Antwortobjekte 1902 an den Anfrageprozessor 1702 übermittelt, der die jeweiligen URL-Adressen aus den empfangenen Anfrageobjekten und Antwortobjekten ermittelt (Block 1903).

Um das richtige Gerät adressieren zu können, wird von dem Anfrageprozessor 1702 eine Geräte-View-Objekt-Anfragenachricht 1904 an das Gerätelisteobjekt 1704 übermittelt und von diesem wird ein Zeiger auf das entsprechende Geräte-View-Objekt 1905 an den Anfrageprozessor 1702 übertragen.

Anschließend wird das Anfrageobjekt bzw. das Antwortobjekt 1902 in einer weiteren Nachricht 1906 von dem Anfrageprozessor 1702 über das jeweilige HTML/WML-Geräte-View-Objekt 1705, welches den jeweiligen Befehl bildet und eine Befehlsnachricht 1907 an den Geräte-View-Controller 1908 sendet, übertragen.

Gleichzeitig wird mit einer Statusanfragenachricht 1908 unmittelbar der Status des jeweiligen zu steuernden Geräts ausgelesen. Ferner wird von dem Anfrageprozessor 1702 eine HTML-Seiten-Anfragenachricht 1909 an das Geräte-View-Objekt 1705 gesendet und die von dort übermittelte HTML-Seite wird an das HTML/WML-Steuerungs-Servlet 1701 als HTML-Seitennachricht 1910 übertragen, welche an die externe Steuerungseinheit als Seiteninformations-Nachricht 1911 übermittelt wird.

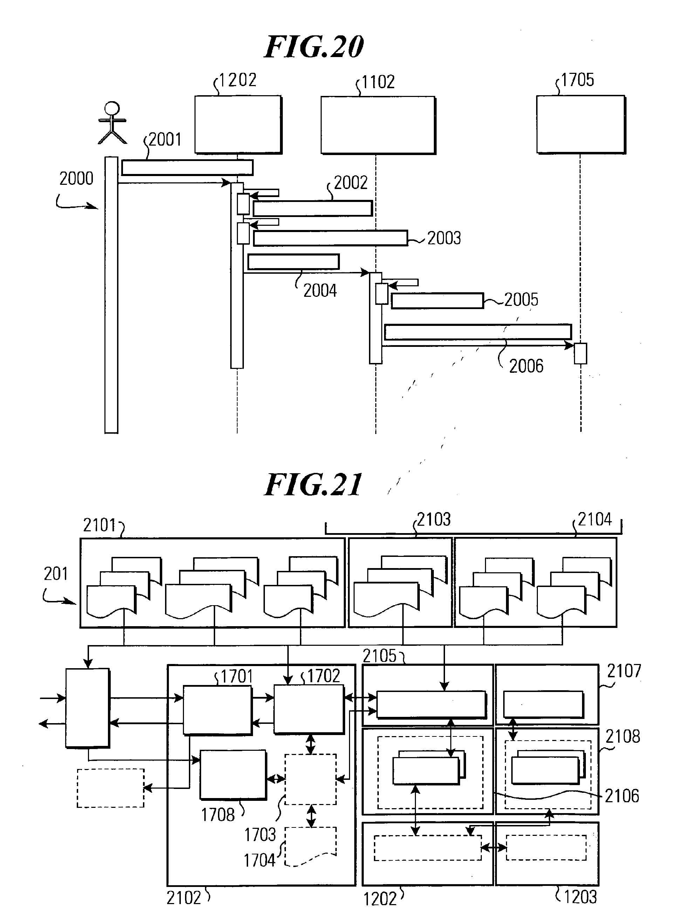

**Fig.20** zeigt in einem weiteren Nachrichtenflussdiagram 2000 den Ablauf eines von dem EHS-Modem übermittelten Ereignisses, bis dieses zu der GUI-Schicht 1103 übermittelt wird.

Wenn Beispielsweise der Status eines zu steuernden Geräts sich verändert, wird ein EHS-Ereignis über das lokale Gebäudenetzwerk an das EHS-Modem gesendet und dieses sendet das EHS-Ereignis als EHS-Ereignisnachricht 2001 an das EHS-Kommunikations-Bundle 1202, welches die als 1 Byte vorliegende Nachricht in einen

Frame konvertiert (Block 2002) und das gebildete Frame anschließend in ein EHS-Ereignis 2003 umwandelt. Anschließend wird eine Ereignis-Benachrichtigungsnachricht 2004 an das Geräte-Modell-Objekt der Gerätetreiber-Schicht 1102 des entsprechenden zu steuernden Geräts, welches die Zustandsänderung an das EHS-Modem gesendet hat, übermittelt, welches darauf hin die Gerätezustandsinformation aktualisiert (Block 2005).

Bei Anfrage durch die externe Steuereinheit wird die jeweils aktualisierte Zustandsinformation an das Geräte-View-Objekt 1705 in einer Zustandsnachricht 2006 übertragen.

**Fig.21** zeigt zusammenfassend die physikalische Struktur der entsprechenden Komponenten in der Gebäude-Gateway-Rechnervorrichtung 201.

In diesem Zusammenhang ist auf die erfindungsgemäße Bundle-Struktur hinzuweisen, das heißt es sind jeweils folgende Bundle vorgesehen
- ein HTML-Resource-Bundle 2101, welche allgemeine HTML-Ressourcen, Bilder oder auch OSGI-Dateien enthalten,
- ein HTML/WML-Steuerungs-Bundle 2102, welche das HTML/WML-Steuerungs-Servlet 1702, die Funktionalität des Anfrageprozessors 1702, die Funktionalität der Geräteliste-Verwaltungseinheit 1703 sowie die Geräteliste 1704 enthält,
- ein Widget-Bibliotheks-Bundle 2103, welches pro verfügbare Sprache im Rahmen der Steuerung eines zu steuernden Geräts jeweils ein OSGI-Bundle enthält,
- ein XML-Geräte-Konfigurations-Bundle 2104, wobei jeweils ein Konfigurations-Bundle für jedes zu steuernde Gerät vorgesehen ist,
- ein HTML-Geräte-View-Bundle 2105, wobei ebenfalls jeweils ein Bundle pro zu steuerndes Gerät vorgesehen ist,
- ein Gerätetreiber-Bundle 2106, wobei wiederum jeweils ein Gerätetreiber-Bundle 2106 für jedes zu steuernde Gerät vorgesehen ist, und welches Gerätetreiber-Bundle 2106 das jeweilige Gerätemodell-Objekt und den Gerätetreiber enthält,
- ein Universal-Gerätetreiber-View-Bundle 2107,
- ein Universal-Gerätetreiber-Bundle 2108,
- das EHS-Kommunikations-Bundle 1202, sowie
- das EHS-Steuerungs-Bundle 1203.

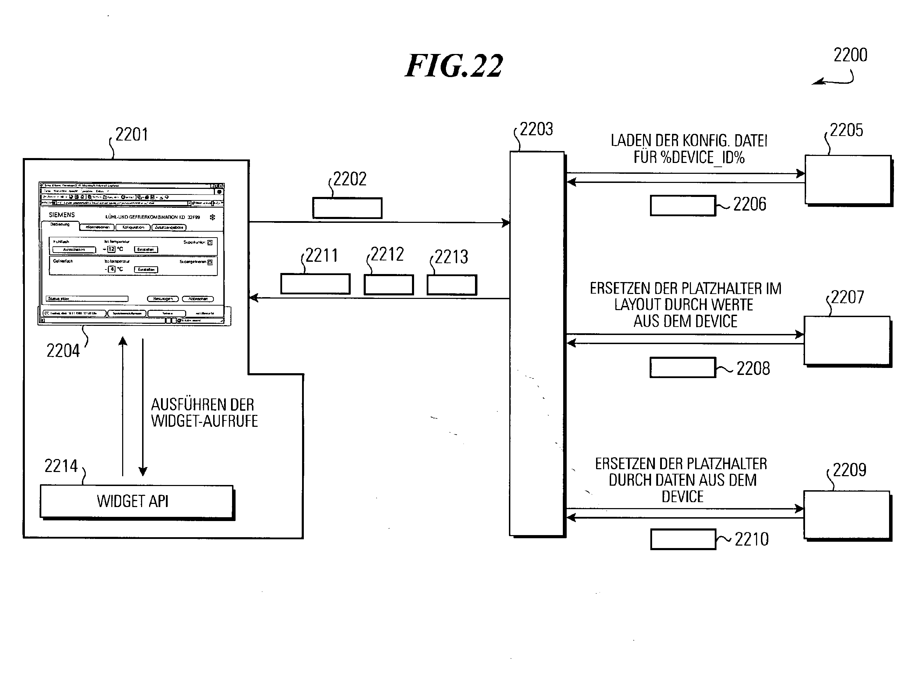

**Fig.22** zeigt in einem Nachrichtenflussdiagramm 2200 ein Verfahren zum Erzeugen einer graphischen Bildschirmoberfläche 2204 in der externen Steuereinheit 2201 gemäß dem Ausführungsbeispiel der Erfindung.

Wird die externe Steuerungseinheit 2201 eingeschaltet, so sendet diese eine Basisstruktur-Anforderungsnachricht 2202 an die Gebäude-Gateway-Rechnervorrichtung 2203.

Mit der Basisstruktur-Anforderungsnachricht 2202 fordert die Steuerungseinheit 2201 die Übermittlung einer Basisstruktur an, in der der Seitenaufbau der graphischen Benutzeroberfläche 2204 in der Steuerungseinheit 2201 angegeben ist. Gemäß diesem Ausführungsbeispiel der Erfindung wird zur Codierung der Seiten der graphischen Benutzeroberfläche 2204 das HTML-Format eingesetzt.

Nach Empfang der Basisstruktur-Anforderungsnachricht, in der eine eindeutige Identifizierungsangabe zur Identifizierung der gewünschten Basisstruktur enthalten ist, greift die Gebäude-Gateway-Rechnervorrichtung 2203 lokal oder entfernt über eine Kommunikationsverbindung auf eine vorzugsweise in einer Datenbank gespeicherte Basisstruktur-Konfigurationsdatei 2205 gespeicherte Basisstruktur zu und lädt die Basisstruktur 2206 in den Speicher der Gebäude-Gateway-Rechnervorrichtung 2203.

Mittels Analyse der Basisstruktur und der darin enthaltenen Parameter werden Platzhalter ermittelt, für die statische Detaildaten, d.h. über die Zeit unveränderliche Daten, welche jedoch gerätespezifisch sind, d.h. spezifisch für das jeweils zu steuernde Gerät sind, für welches Informationen auf der graphischen Bildschirmoberfläche 2204 angegeben werden sollen, ermittelt.

Die Platzhalter in der Basisstruktur stellen ferner eine eindeutige Identifizierungsangabe in Form einer Pfadangabe zu einer ebenfalls vorzugsweise in einer Datenbank gespeicherten Geräte-Konfigurationsdatei 2207 dar und es werden entsprechend der Angaben in der Basisstruktur die statischen Detaildaten ermittelt, d.h. die Detaildaten, welche allgemein die statischen und somit zeitlich unveränderlichen Eigenschaften des jeweils zu steuernden Gerätes beschreiben und lädt diese als erste Detaildaten 2208 in ihren Speicher.

Ebenfalls unter Durchführung einer Analyse der Basisstruktur mittels eines XML-Parsers werden zweite Platzhalter ermittelt, welche Platzhalter sind für dynamische Daten, d.h. anstelle der zweiten Platzhalter werden die mittels der zweiten Platzhalter angegebenen dynamischen Detaildaten, welche ebenfalls gerätespezifisch sind und den jeweils aktuellen Zustand des zu steuernden Gerätes Daten beschreiben, ermittelt.

Hierzu wird jeweils das HTML/WML-Geräte-View-Objekt 2209 kontaktiert und es werden die in dem Objekt gespeicherten dynamischen Daten, die von dem jeweiligen zu steuernden Gerät der Gebäude-Gateway-Rechnervorrichtung 2203 bereitgestellt werden, geladen.

Die ermittelten Daten werden in einem weiteren Schritt von der Gebäude-Gateway-Rechnervorrichtung 2203 in einzelnen Nachrichten, einer Basisstruktur-Nachricht 2211, in der die angeforderte Basisstruktur enthalten ist, einer ersten Detaildaten-Nachricht 2212, in welcher die ermittelten ersten Detaildaten, d.h. somit die statischen Detaildaten, enthalten sind und in einer zweiten Detaildaten-Nachricht 2213, in der die zweiten Detaildaten, die dynamischen Detaildaten enthalten sind, zu der Steuerungsvorrichtung 2201 übermittelt.

Gemäß diesem Ausführungsbeispiel erfolgt die Übermittlung der zweiten Detaildaten unter Verwendung der in [1] beschriebenen Pushlet-Technologie.

Die einzelnen Elemente in der graphischen Benutzeroberfläche 2204 sind als so genannte Widgets definiert, welche Widgets aus den jeweiligen Nachrichten 2211, 2212, 2213 extrahiert werden und unter Verwendung einer Widget-API, d.h. anschaulich einer Widget-Programmierschnittstelle 2214 ausgeführt, so dass durch Zusammenführen der Basisstruktur, der ersten Detaildaten und der zweiten Detaildaten gemäß der Basisstruktur die darzustellende Seite der graphischen Benutzeroberfläche 2204 gebildet wird.

Alternativ können die Basisstruktur, die ersten Detaildaten und die zweiten Detaildaten auch direkt von der Gebäude-Gateway-Rechnervorrichtung 2203 zusammengeführt werden und als ein Template mit den entsprechenden Widget-Aufrufen zu der Steuerungseinheit 2201 übermittelt werden.

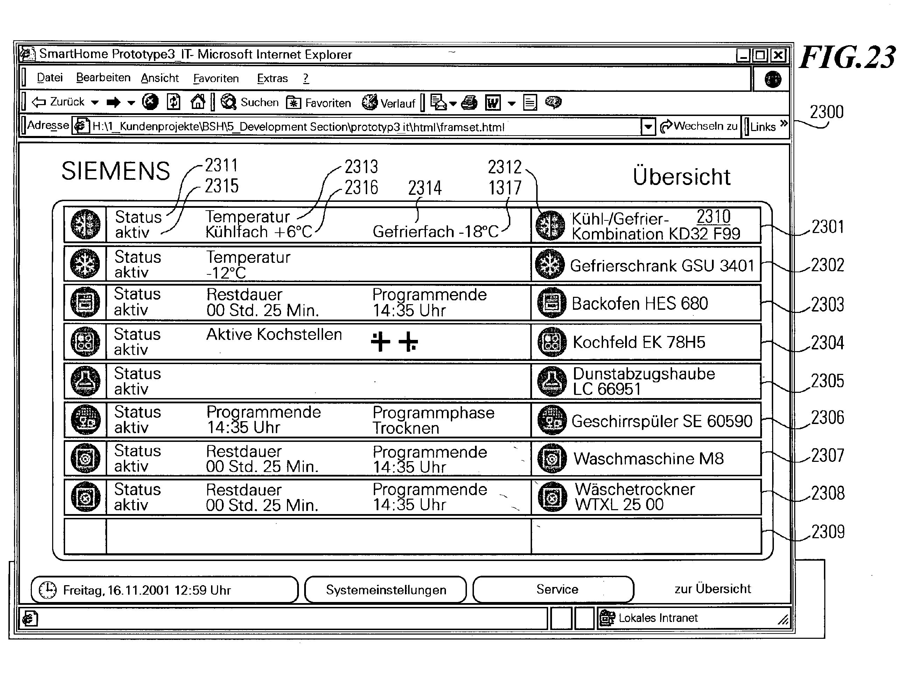

**Fig.23** zeigt zur weiteren Erläuterung eine erste graphische Benutzeroberfläche 2300 gemäß dem Ausführungsbeispiel der Erfindung. Die erste graphische Benutzeroberfläche 2300 weist eine Vielzahl von gerätespezifischen Informationselementen 2301, 2302, 2303, 2304, 2305, 2306, 2307, 2308, 2309, auf.

Für jedes zu steuerndes Gerät ist jeweils ein Informationselement 2301, 2302, 2303, 2304, 2305, 2306, 2307, 2308, 2309, vorgesehen.

Jedes Informationselement 2301, 2302, 2303, 2304, 2305, 2306, 2307, 2308, 2309 weist sowohl statische Detaildaten als auch dynamische Detaildaten, welche jeweils gerätespezifisch sind, auf.

In einem ersten Informationselement 2301, welches vorgesehen ist für eine Kühl-/Gefrierkombination ist die Angabe des jeweiligen Gerätes 2310, eine Statusangabe 2311, ein Symbol 2312, welches das Gerät charakterisiert, eine Temperaturangabe 2313 für das Kühlfach sowie eine Temperaturangabe 2314 für das Gefrierfach angegeben.

In dem ersten Informationsfeld 2301 sind ferner zu den jeweiligen statischen Detaildaten, nämlich zu dem Status 2312, der Temperatur in dem Kühlfach 2313 und der Temperatur in dem Gefrierfach 2314 die jeweils aktuellen Werte, d.h. der aktuelle Zustand des entsprechenden Gerätes, welcher in der aktuellen Statusinformationsübermittlung der Gebäude-Gateway-Rechnervorrichtung 201 von dem Gerät übermittelt worden ist, als dynamische Detaildaten 2315, 2316, 2317, enthalten.

Gemäß diesem Ausführungsbeispiel ist als erstes dynamisches Detaildatum 2315 die Statusangabe dargestellt, dass die Kühl-/Gefrierkombination aktiv ist, in einem zweiten dynamischen Detaildatum 2316, das die Temperatur in dessen Kühlfach +6 °C aufweist und in einem dritten dynamischen Detaildatum 2317 in dessen Gefrierfach eine Temperatur von -18 °C.

In entsprechender Weise sind für die jeweils anderen zu steuernden Geräte abhängig von dem jeweiligen Gerätetyp und der über das zu steuernde Gerät verfügbaren Information, die Informationen in den weiteren Informationselementen 2302, 2303, 2304, 2305, 2306, 2307, 2308, 2309, enthalten.

Auf diese Weise wird es dem Benutzer ermöglicht, auf einen Blick über die externe Steuerungseinheit 2201 sehr schnell einen Überblick über den Zustand aller zu steuernden Geräte zu gewinnen.

Ist der Benutzer der externen Steuerungseinheit 2201 an einer Detailinformation oder an der Steuerung eines der zu steuernden Geräte interessiert, so wählt der Benutzer beispielsweise durch Anklicken des entsprechenden Informationselementes 2301, 2302, 2303, 2304, 2305, 2306, 2307, 2308, 2309 das entsprechende zu steuernde Gerät aus und gelangt beispielsweise bei Auswahl des ersten Informationsfeldes 2301 auf eine gerätespezifische Startseite für die Kühl-/Gefrierkombination.

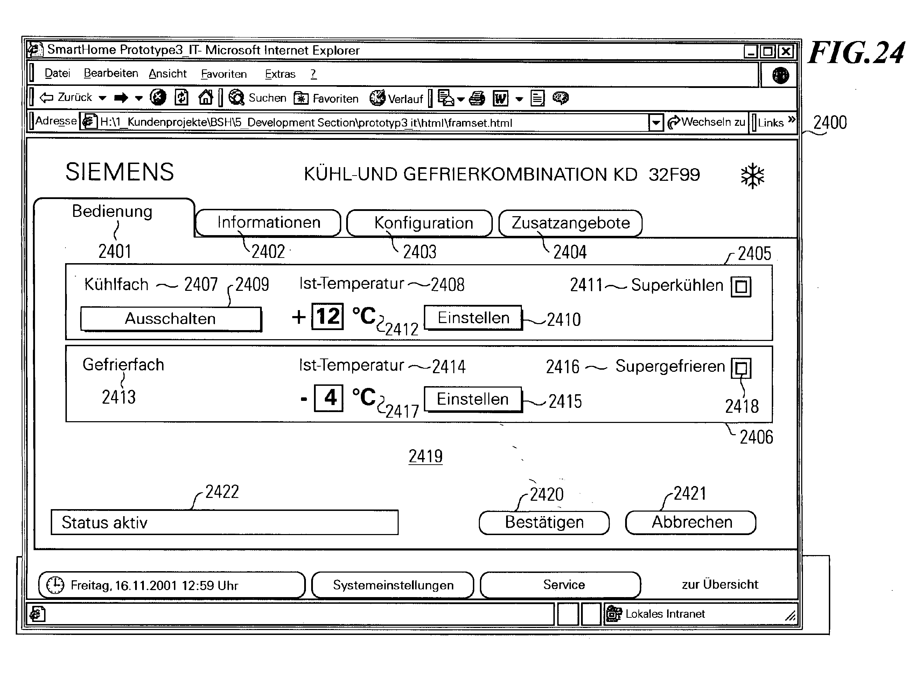

Wiederum sind in der gerätespezifischen Startseite als zweite graphische Benutzeroberfläche 2400 (vgl. **Fig.24**) mittels für statische Detaildaten und für dynamische Detaildaten vorgesehen.

Insbesondere sind in der graphischen Benutzeroberfläche zur freien Auswahl für den Benutzer vier so genannte "Reiter" 2401, 2402, 2403, 2404 zur näheren Auswahl und Darstellung einer zusätzlichen graphischen Benutzeroberfläche vorgesehen, gemäß diesem Ausführungsbeispiel
- ein erster Reiter für die Bedienung der Kühl-/Gefrierkombination 2401,
- ein zweiter Reiter 2402 zur Ermittlung mehrer Informationen über die Kühl-/Gefrierkombination,
- ein dritter Reiter 2403 zur näheren Konfiguration der Kühl-/Gefrierkombination, und
- ein vierter Reiter 2404 zum Bereitstellen und zur Auswahl von Zusatzangeboten zu der Kühl-/Gefrierkombination.

In der zweiten graphischen Benutzeroberfläche 2400 sind für den ersten Reiter 2401 ein erster Bereich 2405 zur detaillierteren Beschreibung und Steuerung des Kühlfaches der Kühl-/Gefrierkombination und ein zweiter Bereich 2406 zur Überwachung und Steuerung des Gefrierfachs der Kühl-/Gefrierkombination dargestellt.

Wiederum sind jeweils Widgets zur Darstellung von statischer Detailinformation, d.h. statischen Detaildaten enthalten, im Weiteren bezeichnet als statische Widgets 2407, 2408, 2409, 2410, 2411 enthalten.

Gemäß diesem Ausführungsbeispiel sind statische Widgets 2407, 2408, 2409, 2410, 2411 unterschieden in Widgets, welche lediglich Information darstellen, die z.B. ein erstes statisches Widget 2407, in dem lediglich der Ausdruck "Kühlfach" enthalten und dem Benutzer dargestellt wird, sowie ein zweiter statischer Widget 2408, in dem der Ausdruck "Ist-Temperatur" enthalten und dargestellt ist.

In einem dritten statischen Widget 2409 ist zusätzlich zur Darstellung des Begriffs "Ausschalten" dieses Widget als ein Steuerungs-Widget eingerichtet, d.h., das Widget kann durch Auswahl einen Befehl erzeugen, der von der Steuereinheit an die Gebäude-Gateway-Rechnervorrichtung und darüber an das zu steuernde Gerät übermittelt wird und dort ausgeführt wird; gemäß diesem Ausführungsbeispiel kann das Gerät ausgeschaltet werden oder es kann eine Einstellung beispielsweise zur Veränderung der Temperatur vorgenommen werden.

In einem dynamischen Widget, wie beispielsweise dem dynamischen Widget 2412 wird die jeweils aktuelle Zustandsinformation des zu steuernden Geräts, gemäß **Fig.24** die Angabe der aktuellen Temperatur in dem Kühlfach, dargestellt.

In dem zweiten Bereich 2406 sind entsprechende statische Widgets 2413, 2414, 2415, 2416 sowie dynamische Widget 2417, 2418 vorgesehen.

In einem allgemeinen Steuerungsbereich des ersten Widgets 2419 sind weitere statische Widgets 2420, 2421, sowie ein dynamisches Widget 2422 zur allgemeinen Statusangabe enthalten.

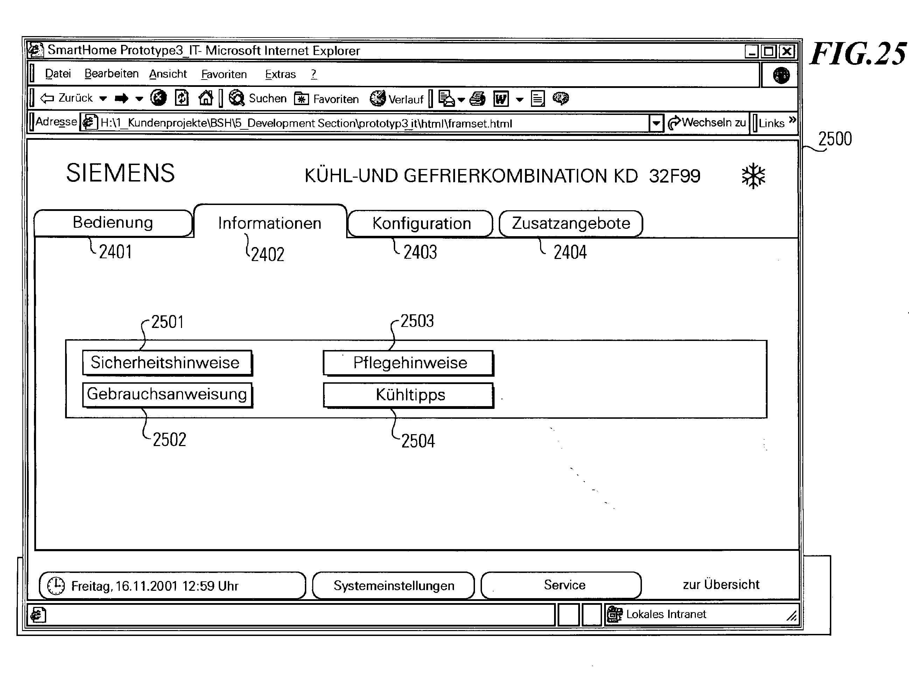

**Fig.25** zeigt in einer dritten graphischen Benutzeroberfläche 2500 die Detailinformation bei Auswahl des zweiten Reiters 2402.

Bei Auswahl des zweiten Reiters 2402 werden dem Benutzer über die dritte graphische Benutzeroberfläche 2500 mehrere Auswahloptionen bereitgestellt auswählbar über weitere statische Widgets 2501, 2502, 2503, 2504.

Bei Auswahl des ersten statischen Widgets 2501 werden dem Benutzer zusätzliche Sicherheitshinweise, bei Auswahl des zweiten statischen Widgets 2502 eine Gebrauchsanweisung, bei Auswahl des dritten statischen Widgets 2503 zusätzliche Pflegehinweise sowie bei Auswahl des vierten statischen Widgets 2504 Kühltipps zu der Kühl-/Gefrierkombination dargestellt.

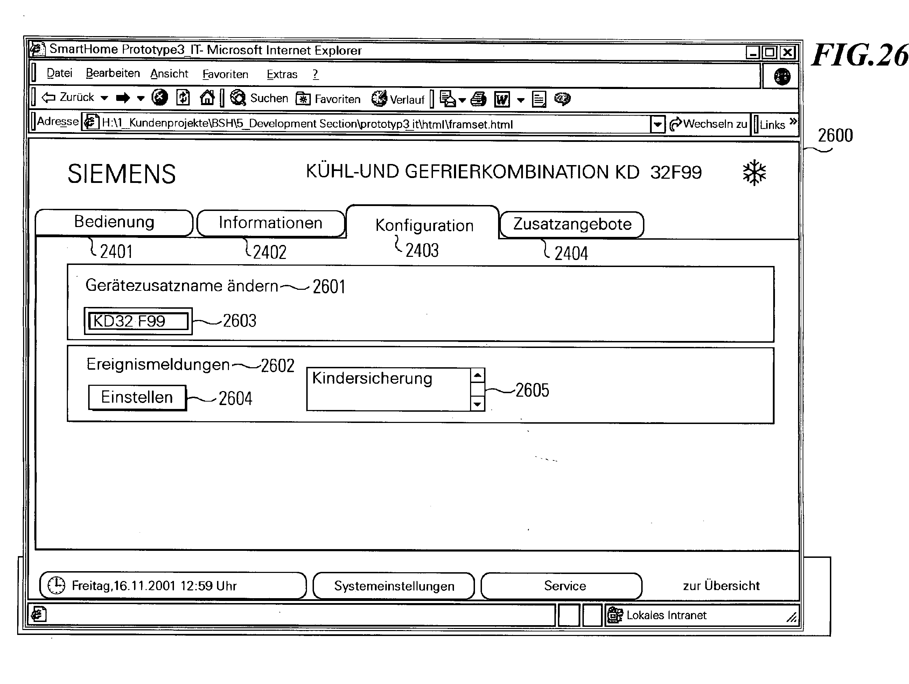

In einer vierten graphischen Benutzeroberfläche 2600 (vgl. **Fig.26**) ist die Detailinformation bei Auswahl des dritten Reiters 2403 dargestellt.

In der dritten graphischen Benutzeroberfläche 2600 ist es möglich, beispielsweise den Gerätezusatznamen zu ändern oder Ereignismeldungen darzustellen oder auch einzustellen.

Hierfür sind wiederum sowohl statische Widgets 2601, 2602, 2604 als auch dynamische Widgets 2603, 2605 vorgesehen, welche von dem Benutzer der Steuerungseinheit 2201 ausgewählt werden können.

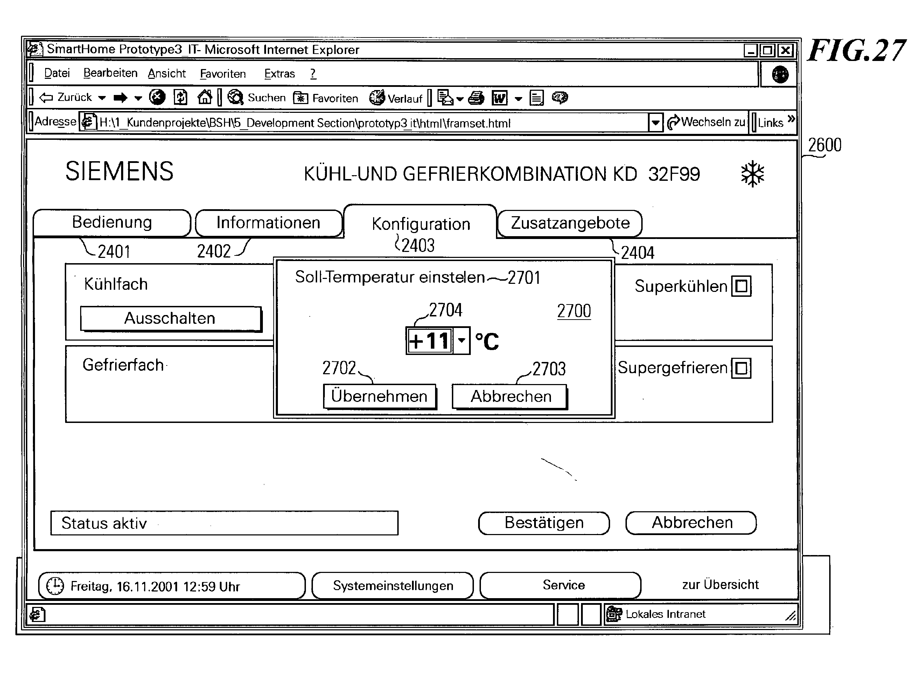

Bei Auswahl der zweiten dynamischen Widgets 2604 in der dritten graphischen Benutzeroberfläche 2600 ist es beispielsweise möglich, die Soll-Temperatur des Gefrierfachs einzustellen, was über einen in **Fig.27** dargestellten Einstellungsbereich 2700, welcher wiederum statische Widgets 2701, 2702, 2703 und ein Temperatur-Einstellungs-Widget 2704 enthält, über welches Einstellungsmittel 2704 die Solltemperatur des Gefrierfachs angegeben werden kann.

Nach Einstellung der Solltemperatur und Auswahl des zweiten statischen Widgets "Übernehmen" 2702 wird der eingestellte Parameterwert für die Solltemperatur an das entsprechende zu steuernde Gerät übertragen als ein entsprechender Temperatur-Einstellungsbefehl.

Im Weiteren wird zusammenfassend noch einmal der Aufbau der dem Benutzer dargestellten HTML-Seiten beschrieben:

Designelement wie Bilder, HTML Code und Texte werden wie oben erläutert durch sogenannte Konfigurations-Dateien beschrieben und sind dadurch vom eigentlichen Programmcode getrennt.

Zur Programmlaufzeit werden diese Dateien eingelesen und die darin enthaltenen Informationen ergeben zusammen mit den Modelldaten (Zustände der Geräte) die jeweilige graphische Benutzeroberfläche.

Die Informationen in den Konfigurations-Dateien sind in XML Format abgelegt. Es gibt eine erste Konfigurations-Datei zur Beschreibung der Seitenaufbaus, und eine zweite Konfigurations-Datei zur Definition von Ereignissen (Events). Um Sprachunabhängigkeit zu gewährleisten werden alle Text in eigenen Java Property Dateien gespeichert und von dort eingelesen.

Im Weiteren ist ein Beispiel einer erfindungsgemäßen Basisstruktur angegeben: n

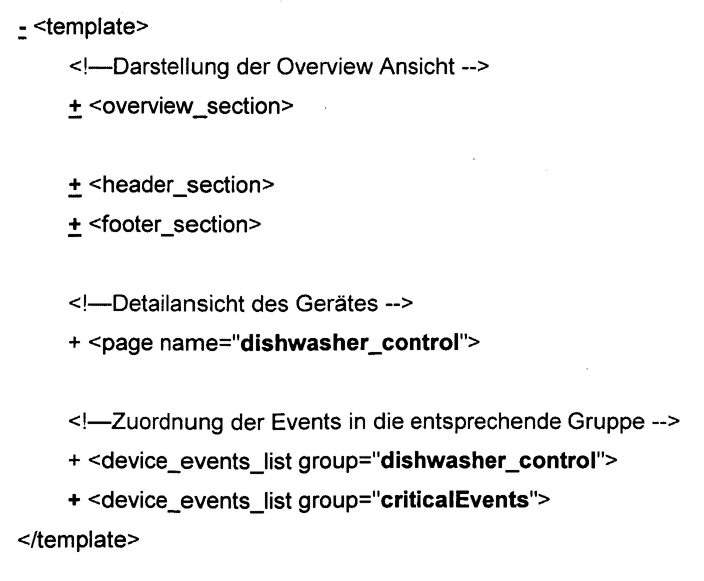

Diese Struktur unterteilt die GUI in unterschiedlichen Ansichten (Views) und Bereiche.

Jedes der Elemente kann beliebig viele Detailelemente enthalten, die im nachfolgenden

Absatz angeführt sind:

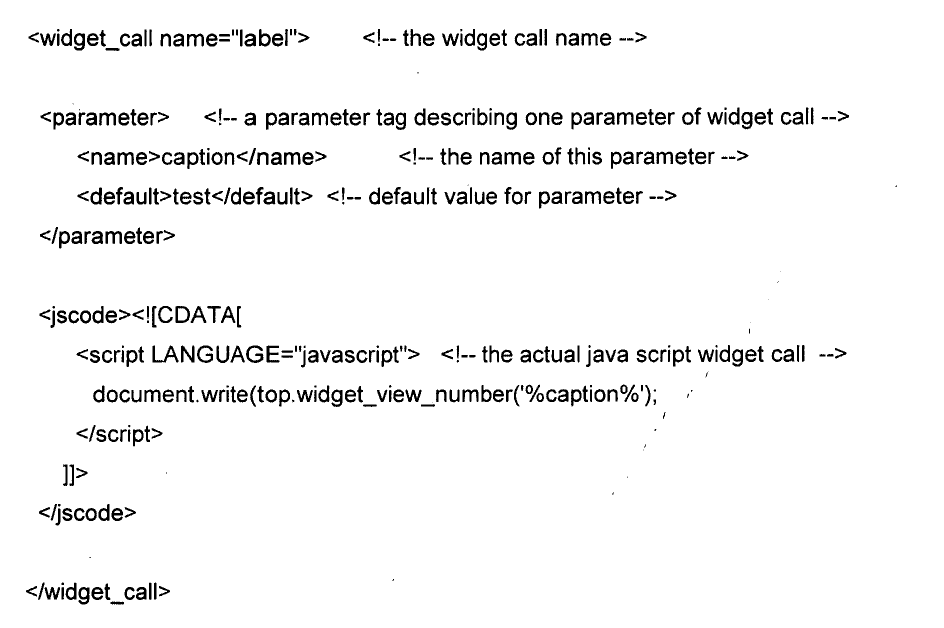

Das Widget Call Element ordnet ein ausgewähltes Widget auf der Seite an und legt die notwendigen Parameter fest, die dann durch die aktuellen Gerätewerte (dynamisches Detaildatum) ersetzt werden.

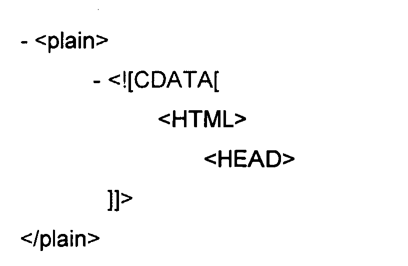

Durch das Plain Element kann beliebiger HTML Code eingefügt werden.

Im Weiteren ist ein Beispiel einer Ereignis-Beschreibungs-Datei angegeben:

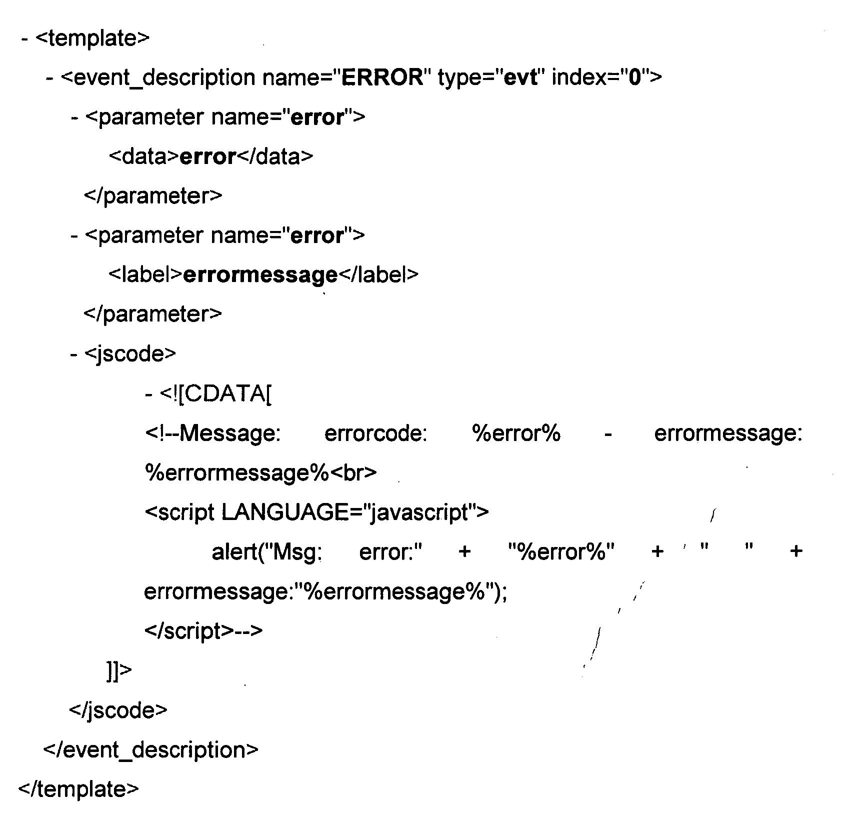

Durch diese Konfigurations-Datei wird einem Event-Index ein Java Script Command zugewiesen, welches über einen Event-Channel an den Browser übertragen wird.

Wird ein neues Gerät vom System erkannt, so wird ein entsprechendes Geräte-Modell sowie ein Geräte-View-Objekt erzeugt. Das Geräte-View-Objekt liest nun die mitgelieferten Konfigurations-Dateien ein und übergibt diese an den Anfrageprozessor. Dieser wertet die Informationen der Datei mit Hilfe eines XML-Parsers aus und erzeugt eine Objektstruktur mit den einzelnen Elementen der Seite. Dabei werden die Texte aus den Java Property Files für die jeweils ausgewählte Sprache verwendet.

Wird von einem Benutzer über einen Browser eine Anfrage an die Gebäude-Gateway-Rechnervorrichtung 201 gestellt, so wird diese Anfrage vom Anfrageprozessor zum Geräte-View-Objekt weitergeleitet.

Dieses fragt die aktuellen Gerätezustände beim Geräte-Modell ab und generiert aus der oben erzeugten Objektstruktur die HTML-Ausgabe für den Browser. Dabei werden die Platzhalter für die Gerätewerte durch die realen Werte ersetzt.

In diesem Dokument ist folgende Veröffentlichung zitiert:
[1] Erhältlich am 25. Februar 2002 unter Internet-Adresse:
http://www.fluidiom.com:8080/doc/wp

## Patentansprüche

1. Verfahren zum rechnergestützten Erzeugen einer graphischen Benutzeroberfläche (2204) einer Geräteüberwachungseinheit und/oder Gerätesteuerungseinheit (2201),
• bei dem aus einer Basis-Konfigurationsdatei (2205) eine Basisstruktur (2206) der graphischen Benutzeroberfläche (2204) ermittelt wird,
• bei dem abhängig von der Basisstruktur (2206) der graphischen Benutzeroberfläche (2204) gerätespezifische statische Detaildaten (2208) aus einer gerätespezifischen Geräte-Konfigurationsdatei (2207) ermittelt werden,
• bei dem abhängig von der Basisstruktur (2206) der graphischen Benutzeroberfläche (2204) gerätespezifische dynamische Detaildaten (2210), welche von dem zu steuernden Gerät bereitgestellt werden und welche einen Zustand des zu überwachenden und/oder zu steuernden Geräts beschreiben, ermittelt werden, und
• bei dem die graphische Benutzeroberfläche (2204) gemäß der Basisstruktur (2206) gebildet wird, wobei die statischen Detaildaten (2208) und die dynamischen Detaildaten (2210) in die graphische Benutzeroberfläche (2204) eingefügt werden.

2. Verfahren gemäß Anspruch 1, bei dem das Ermitteln der Basisstruktur (2206) und/oder der statischen Detaildaten (2208) und/oder der dynamischen Detaildaten (2210) gemäß einem Kommunikationsprotokoll der Anwendungsschicht erfolgt.

3. Verfahren gemäß Anspruch 2, bei dem das Ermitteln der Basisstruktur (2206) und/oder der statischen Detaildaten (2208) und/oder der dynamischen Detaildaten (2210) gemäß dem HTTP-Standard oder dem WAP-Standard erfolgt.

4. Verfahren gemäß einem der Ansprüche 1 bis 3, bei dem die Basisstruktur (2206) gemäß einem Metadaten-Format codiert ist.

5. Verfahren gemäß Anspruch 4, bei dem die Basisstruktur (2206) gemäß dem XML-Format (Extended Markup Language) codiert ist.

6. Verfahren gemäß einem der Ansprüche 1 bis 5,
• bei dem die Basis-Konfigurationsdatei (2205) und/oder die Geräte-Konfigurationsdatei (2207) in einem Speicher einer Gebäude-Gateway-Rechnervorrichtung (2203) gespeichert sind,
• bei dem zum Ermitteln der Basisstruktur (2206) von der Steuerungseinheit (2201) eine Basisstruktur-Anforderungsnachricht (2202) an die Gebäude-Gateway-Rechnervorrichtung (2203) übermittelt wird,
• bei dem eine Basisstruktur-Nachricht(2211), welche die angeforderte Basisstruktur enthält, von der Gebäude-Gateway-Rechnervorrichtung (2203) an die Steuerungseinheit (2201) übermittelt wird,
• bei dem zum Ermitteln der statischen Detaildaten (2208) von der Steuerungseinheit eine erste Detaildaten-Anforderungsnachricht an die Gebäude-Gateway-Rechnervorrichtung (2203) übermittelt wird,
• bei dem eine erste Detaildaten-Nachricht (2212), welche die angeforderten statischen Detaildaten (2208) enthält, von der Gebäude-Gateway-Rechnervorrichtung (2203) an die Steuerungseinheit (2201) übermittelt wird,
• bei dem zum Ermitteln der dynamischen Detaildaten (2210) von der Steuerungseinheit (2201) eine zweite Detaildaten-Anforderungsnachricht an die Gebäude-Gateway-Rechnervorrichtung (2203) übermittelt wird,
• bei dem eine zweite Detaildaten-Nachricht (2213), welche die angeforderten dynamischen Detaildaten (2210) enthält, von der Gebäude-Gateway-Rechnervorrichtung (2203) an die Steuerungseinheit (2201) übermittelt wird.

7. Verfahren gemäß einem der Ansprüche 1 bis 6,
• bei dem das zu überwachende und/oder zu steuernde Gerät ein in einem Gebäude angeordnetes kommunikationsfähiges Gerät ist, und
• bei dem die zweiten Detaildaten (2210) von dem kommunikationsfähigen Gerät zu der Steuerungseinheit (2201) und/oder zu der Gebäude-Gateway-Rechnervorrichtung (2203) gemäß einem Inhaus-Kommunikationsprotokoll übermittelt werden.

8. Verfahren gemäß Anspruch 7, bei dem das zu überwachende und/oder zu steuernde Gerät ein Hausgerät ist.

9. Verfahren gemäß Anspruch 8, bei dem die zweiten Detaildaten (2210) von dem Hausgerät zu der Steuerungseinheit (2201) und/oder zu der Gebäude-Gateway-Rechnervorrichtung (2203) gemäß dem EHS-Kommunikationsprotokoll übermittelt werden.

10. Verfahren gemäß Anspruch 8 oder 9, bei dem das Hausgerät als eines der folgenden Hausgeräte eingerichtet ist:
• Waschmaschine,
• Wäschetrockner,
• Herd,
• Kühlschrank,
• Geschirrspüler,
• Dunstabzugshaube,
• Klimaanlage,
• Kaffeemaschine,
• Staubsauger,
• Kochmulde, oder
• Gefrierschrank.

11. Geräteüberwachungs-/Steuerungseinheit (2201) mit einer Prozessoreinheit zum Erzeugen einer graphischen Benutzeroberfläche (2204) für die Geräteüberwachungs-/Steuerungseinheit (2201), welche derart eingerichtet ist, dass folgende Verfahrensschritte durchführbar sind:
• aus einer Basis-Konfigurationsdatei (2205) wird eine Basisstruktur (2206) der graphischen Benutzeroberfläche (2204) ermittelt,
• abhängig von der Basisstruktur (2205) der graphischen Benutzeroberfläche (2204) werden gerätespezifische statische Detaildaten (2208) aus einer gerätespezifischen Geräte-Konfigurationsdatei (2207) ermittelt,
• abhängig von der Basisstruktur (2206) der graphischen Benutzeroberfläche (2204) werden gerätespezifische dynamische Detaildaten (22010), welche von dem zu steuernden Gerät bereitgestellt werden und welche einen Zustand des zu überwachenden und/oder zu steuernden Geräts beschreiben, ermittelt, und
• die graphische Benutzeroberfläche (2204) wird gemäß der Basisstruktur (2206) gebildet, wobei die statischen Detaildaten (2208) und die dynamischen Detaildaten (2210) in die graphische Benutzeroberfläche (2204) eingefügt werden.
